(19) Europäisches Patentamt
European Patent Office
Office européen des brevets

(11) **EP 2 742 992 A1**

(12) **EUROPEAN PATENT APPLICATION**
published in accordance with Art. 153(4) EPC

(43) Date of publication:
**18.06.2014 Bulletin 2014/25**

(51) Int Cl.:
**B01D 63/00** (2006.01)   **B01D 63/10** (2006.01)
**B01D 69/10** (2006.01)   **B01D 69/12** (2006.01)

(21) Application number: **12836617.6**

(22) Date of filing: **28.09.2012**

(86) International application number:
**PCT/JP2012/075078**

(87) International publication number:
**WO 2013/047746 (04.04.2013 Gazette 2013/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2011   JP 2011214219
02.12.2011   JP 2011264502**

(71) Applicant: **Toray Industries, Inc.
Tokyo, 103-8666 (JP)**

(72) Inventors:
• **HIROZAWA, Hiroho
Otsu-shi
Shiga 520-8558 (JP)**
• **KOIWA, Masakazu
Otsu-shi
Shiga 520-8558 (JP)**
• **TAKAGI, Kentaro
Otsu-shi
Shiga 520-8558 (JP)**

• **OKAMOTO, Yoshiki
Otsu-shi
Shiga 520-8558 (JP)**
• **YAMADA, Hiroyuki
Otsu-shi
Shiga 520-8558 (JP)**
• **HAMADA, Tsuyoshi
Otsu-shi
Shiga 520-8558 (JP)**
• **OTO, Katsufumi
Otsu-shi
Shiga 520-8558 (JP)**
• **KIMURA, Masahiro
Otsu-shi
Shiga 520-8558 (JP)**

(74) Representative: **Hoefer & Partner
Pilgersheimer Straße 20
81543 München (DE)**

(54) **SEPARATION MEMBRANE, SEPARATION MEMBRANE ELEMENT, AND PRODUCTION METHOD FOR SEPARATION MEMBRANE**

(57)     A separation membrane, including: a separation membrane main body having at least a base material and a separating functional layer; and a flow path material independently fixed in the thickness direction of the base material, and having a compression elasticity of 0.1-5.0 GPa.

【Fig.5】

EP 2 742 992 A1

## Description

TECHNICAL FIELD

The present invention relates to a separation membrane adapted for use in separating components in a fluid such as liquid or gas.

BACKGROUND ART

In a technology for removing ionic substances in sea water, brackish water, and the like, in recent years, a method of separation by a separation membrane element is widely used as a process for energy conservation and natural resource saving. Separation membranes used for the method of separation by a separation membrane element are divided into a microfiltration membrane, an ultrafiltration membrane, a nanofiltration membrane, a reverse osmosis membrane, and a forward osmosis membrane in terms of its pore diameter or a separation function. These membranes are used, for example, in the production of drinking water from sea water, brackish water, water containing toxic substances, and the like, as well as in the production of industrial ultra-pure water, wastewater treatment, and recovery of valuables. The membranes used are selected depending on the target component to be separated as well as the separation performance.

Various forms have been proposed for the separation membrane element, but they are common in that raw water is supplied to one surface of a separation membrane and permeate fluid is obtained from the other surface. The separation membrane element is configured by including many separation membranes bundled so that a membrane area per separation membrane element is increased, that is, so that an amount of permeate fluid to be obtained per separation membrane element is increased. As the separation membrane element, various forms such as a spiral type, a hollow fiber type, a plate and frame type, a rotating flat-sheet membrane type and an integrated flat-sheet membrane type are proposed according to uses and purpose.

For example, a spiral separation membrane element is widely used for reverse osmosis-filtration. The spiral separation membrane element includes a central tube and a laminate wound around the central tube. The laminate is formed by laminating a channel material on the feed side for supplying raw water (i.e., water to be treated) to the surface of the separation membrane, a separation membrane for separating components in the raw water, and a channel material on the permeate side for guiding the fluid on the permeate side, which permeates the separation membrane to be separated from the fluid on the feed side, to the central tube. Since the spiral separation membrane element can provide pressure for the raw water, a large amount of the permeate fluid can be drawn out, and therefore it is preferably used.

In the spiral separation membrane element, in general, a polymer net is mainly used as a channel material on the feed side for the formation of a channel on the feed side fluid. Further, as the separation membrane, a laminate type separation membrane is used. The laminate type separation membrane is a separation membrane comprising a separation functional layer of a crosslinkable high molecular weight compound such as polyamide, a porous resin layer of a high molecular weight compound such as polysulfone, and a nonwoven fabric of a high molecular weight compound such as polyethylene terephthalate, which are disposed in this order from the feed side to the permeate side. Further, a knitted fabric member referred to as tricot, which has a smaller channel interval than that of the channel material on the feed side, is used for the channel material on the permeate side for the purpose of preventing falling of the separation membrane and forming the flow path on the permeate side.

In recent years, improvement in performance of the membrane element has been demanded because of increasing requirement for reducing the cost of water production. In order to improve separation performance of the separation membrane, element and to increase the amount of the permeate fluid produced per unit time, for example, improvement in performance of members of the separation membrane element such as respective channel members has been proposed.

Specifically, Patent Document 1 proposes an element comprising a sheet member provided with projections and depressions as the channel material on the permeate side. Patent Document 2 proposes an element which does not require the channel material forms such as a net on the feed side or the channel material such as tricot on the permeate side by disposing a sheet-like separation membrane comprising a porous support having projections and depressions formed thereon and a layer having separation activity.

PRIOR ART DOCUMENTS

PATENT DOCUMENTS

Patent Document 1: Japanese Patent Laid-open Publication No. 2006-247453
Patent Document 2: Japanese Patent Laid-open Publication No. 2010-99590

SUMMARY OF THE INVENTION

PROBLEMS TO BE SOLVED BY THE INVENTION

However, the separation membrane elements as described above are not sufficient in improving their performance, particularly in improving the stability of the separation performance in the long term operation.

Thus, it is an object of the present invention to provide a separation membrane and a separation membrane element which can stabilize separation/removal performance at the time when the separation membrane element is operated by particularly applying high pressure.

SOLUTIONS TO THE PROBLEMS

In order to achieve the above-mentioned object, a separation membrane of the present invention includes: a separation membrane main body having at least a substrate and a separation functional layer, and a channel material solely affixed in the thickness direction of the substrate, wherein the channel material has a compressive elasticity modulus of 0.1 GPa or more and 5.0 GPa or less.

The separation membrane can be applied to a separation membrane element. The separation membrane element includes a water collection tube, and a separation membrane which is arranged such that the first direction is along an axial direction of the water collection tube, and wound around the water collection tube.

EFFECTS OF THE INVENTION

According to the present invention, it is possible to attain a high performance and high efficiency separation membrane element which can form a stable flow path on the permeate side with high efficiency, and has removal performance of the target component to be separated as well as high permeation performance.

BRIEF DESCRIPTION OF THE DRAWINGS

Fig. 1 is an exploded perspective view showing an embodiment of a separation membrane leaf.
Fig. 2 is a plan view showing a separation membrane provided with a channel material continuously disposed in a length direction (second direction) of the separation membrane.
Fig. 3 is a plan view showing a separation membrane provided with a channel material discontinuously disposed in a length direction (second direction) of the separation membrane.
Fig. 4 is a sectional view of the separation membrane of Fig. 2 and Fig. 3.
Fig. 5 is a developed perspective view showing an embodiment of a separation membrane element.
Fig. 6 is a schematic side elevation view of the separation membrane.
Fig. 7 is a sectional view showing a schematic constitution of a separation membrane main body.
Fig. 8 is a partially developed perspective view showing a first embodiment of a separation membrane element.
Fig. 9 is a partially developed perspective view showing a second embodiment of a separation membrane element.
Fig. 10 is a partially developed perspective view showing a third embodiment of a separation membrane element.

EMBODIMENTS OF THE INVENTION

Hereinafter, an embodiment of the present invention will be described in detail.

[1. Separation Membrane]

(1-1) Overview of Separation Membrane

A separation membrane is a membrane which can separate components in fluid supplied to the surface of the separation membrane to obtain permeate fluid having permeated the separation membrane. The separation membrane includes a separation membrane main body and a channel material arranged on the separation membrane main body.

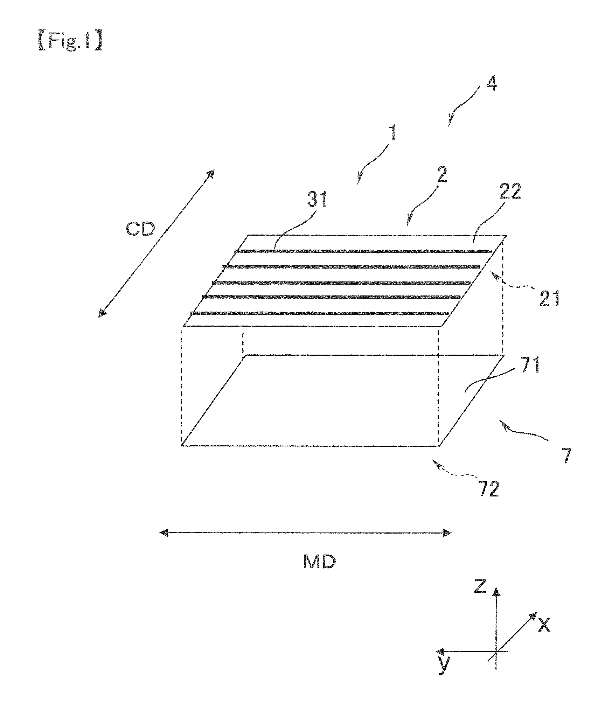

As an example of such a separation membrane, an exploded perspective view of a separation membrane leaf, including an example of an embodiment of the separation membrane of the present invention, is shown in Fig. 1. In Fig. 1, a separation membrane leaf 4 includes a separation membrane 1 and a separation membrane 7, and is arranged so as to oppose a feed-side surface 21 of the separation membrane 1 to a feed-side surface 71 of the separation membrane 7. The separation membrane 1 includes a separation membrane main body 2 and a channel material 31 on the permeate side. The channel material 31 is disposed on a permeate-side surface 22 so as to form a flow path. A detail of the respective portions of the separation membrane 1 will be described later. The separation membrane main body 2 includes the feed-side surface 21 and the permeate-side surface 22. The separation membrane 7 includes the feed-side surface 71 and a permeate-side surface 72.

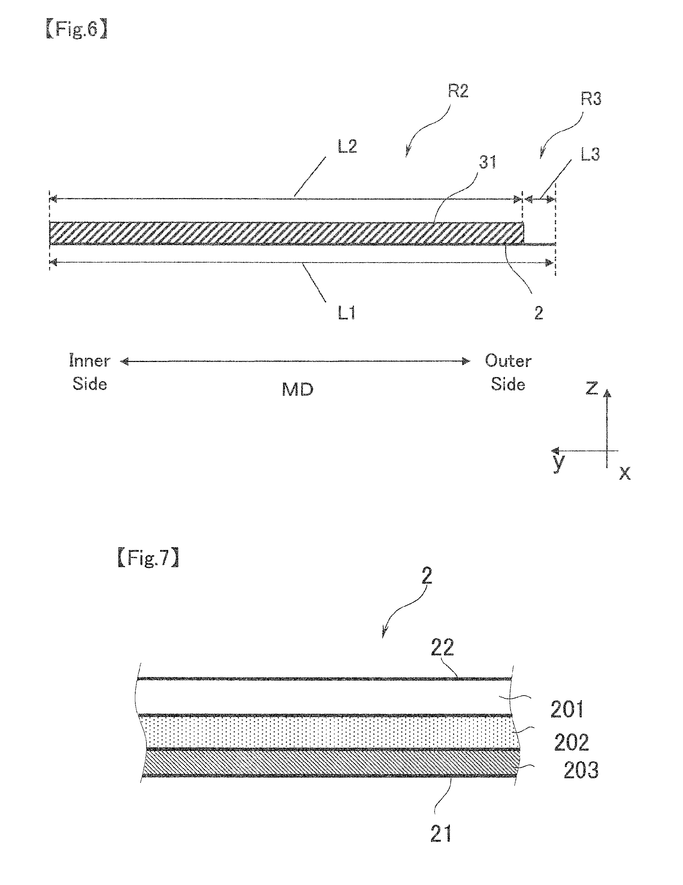

In the present specification, the "feed-side surface" of the separation membrane main body means a surface on the side to which raw water is supplied, of two surfaces of the separation membrane main body. The "permeate-side surface" means a surface opposite to the feed-side surface. As described later, when the separation membrane main body includes a substrate 201 and a separation functional layer 203 as shown in Fig. 7, in general, the surface on a separation functional layer side is the feed-side surface 21, and the surface on a substrate side is the permeate-side surface 22.

In Fig. 7, the separation membrane main body 2 is shown as a laminate of a substrate 201, a porous support layer 202 and a separation functional layer 203. As described above, the feed-side surface 21 is a surface open to the outside of the separation functional layer 203, and the permeate-side surface 22 is a surface open to the outside of the substrate 201.

Directional axes of x-axis, y-axis and z-axis are shown in drawings. The x-axis may be referred to as a first direction, and the y-axis may be referred to as a second direction. As shown in Fig. 1 or the like, the separation membrane main body 2 is rectangular, and the first direction and the second direction are parallel to an outer edge of the separation membrane main body 2. The first direction may be referred to as a width direction, and the second direction may be referred to as a length direction. In Fig. 1, the first direction (width direction) is indicated by an arrow CD, and the second direction (length direction) is indicated by an arrow MD.

(1-2) Separation Membrane Main Body

<Overview>

As the separation membrane main body, a membrane having separation performance according to usage, an intended use or the like is used. The separation membrane main body may be formed of a simple layer, or may be a composite membrane including a separation functional layer and a substrate. Further, as shown in Fig. 7, a porous support layer 202 may be formed between a separation functional layer 203 and a substrate 201 in the composite membrane.

<Separation Functional Layer>

The thickness of the separation functional layer is not limited to a specific value, but it is preferably 5 nm or more and 3000 nm or less in view of the separation performance and the permeation performance. Particularly in the case of the reverse osmosis membrane, the forward osmosis membrane, and the nanofiltration membrane, the thickness is preferably 5 nm or more and 300 nm or less.

The thickness of the separation functional layer may be measured in accordance with a usual method of measuring the thickness of the separation membrane. For example, an ultrathin section is prepared by embedding the separation membrane in a resin and slicing from the embedded membrane, and the resulting thin section is subjected to the staining or other necessary treatment. Thereafter, the section is observed with a transmission electron microscope, and thereby, the thickness can be measured. Further, when the separation functional layer has a pleated structure, the thickness can be determined by measuring the thickness in the longitudinal cross-sectional direction of the pleated structure for 20 pleats present above the porous support layer at an interval of 50 nm, and calculating the average of the 20 measurements.

The separation functional layer may be a layer having both of a function of separation and a function of support, or may have only the function of separation. Here, the "separation functional layer" refers to a layer having at least the function of separation.

When the separation functional layer has both of the function of separation and the function of support, a layer containing, as the main component, cellulose, polyvinylidene fluoride, polyether sulfone or polysulfone is preferably applied as the separation functional layer.

In the present specification, the phrase "X contains Y as the main component" means that the content of the Y in the X is 50% by mass or more, 70% by mass or more, 80% by mass or more, 90% by mass or more, or 95% by mass or more. When a plurality of components corresponding to the Y are present, the total amount of the plurality of components may satisfy the range described above.

On the other hand, as the material used for the separation functional layer supported by the porous support layer, a crosslinkable polymer is preferably used in view of ease of the control of the pore size and excellent curability. Particularly, in view of the excellent separation performance of components in the raw water, a polyamide separation functional layer prepared by polycondensation of a polyfunctional amine and a polyfunctional acid halide, an organic-inorganic hybrid functional layer, or the like is suitably used. These separation functional layers can be formed by polycondensation of monomers on the porous support layer.

For example, the separation functional layer may contain polyamide as the main component. Such a membrane is formed by interfacial polycondensation of a polyfunctional amine and a polyfunctional acid halide according to a publicly known method. For example, a polyfunctional amine aqueous solution is applied onto the porous support layer, and the excessive amine aqueous solution is removed with an air knife or the like. Thereafter, an organic solvent solution containing a polyfunctional acid halide is applied to obtain a polyamide separation functional layer.

Further, the separation functional layer may have an organic-inorganic hybrid structure containing Si element. The separation functional layer having the organic-inorganic hybrid structure can contain, for example, the following compounds (A) and (B):

(A) a silicon compound having a reactive group containing an ethylenic unsaturated group and a hydrolyzable group directly bonded to the silicon atom, and
(B) a compound having an ethylenic unsaturated group other than the silicon compound (A) as described above.

Specifically, the separation functional layer may contain a condensate of the hydrolyzable group of the compound

(A) and a polymerization product of the ethylenic unsaturated group of the compound (A) and/or the compound (B). That is, the separation functional layer may contain at least one polymerization product of:

- a polymerization product formed by condensation and/or polymerization of only the compound (A);
- a polymerization product formed by polymerisation of only the compound (B); and
- a copolymer of the compound (A) and the compound (B).

Here, the polymerization product includes a condensate. Further, the compound (A) may be condensed through a hydrolyzable group in the copolymer of the compound (A) and the compound (B).

The hybrid structure can be formed by a publicly known method. An example of the method of forming the hybrid structure is as follows. A reaction liquid containing the compound (A) and the compound (B) is applied onto the porous support layer. After the excessive reaction liquid is removed, heating treatment may be performed in order to condense the hydrolyzable group. Heat treatment and irradiation with an electromagnetic wave, electron beams or plasma may be employed for a polymerization method of the ethylenic unsaturated group of the compound (A) and that of the compound (B). In the formation of the separation functional layer, a polymerization initiator, a polymerization promoter, or the like may be added for the purpose of increasing the polymerization rate.

In addition, a membrane surface of any separation functional layer may be hydrophilized, for example, with an aqueous solution containing alcohol or an alkali aqueous solution before use.

<Porous Support Layer>

A porous support layer is a layer which supports the separation functional layer, and is also referred to as a porous resin layer.

A material used for the porous support layer and a shape of the porous support layer are not particularly limited, and for example, the layer may be formed on the substrate by use of a porous resin. As the porous support layer, polysulfone, cellulose acetate, polyvinyl chloride, epoxy resin, or a mixture or a laminate thereof are used, and use of polysulfone is preferable in consideration of the high chemical, mechanical, and thermal stability and ease of controlling the pore size.

The porous support layer provides mechanical strength for the separation membrane and it does not have the separation performance for the component with small molecular size such as ions as in the case of the separation membrane. The pore size and pore distribution of the porous support layer are not particularly limited, and for example, the porous support layer may have uniform fine pores, or may have pore size distribution in which the pore size gradually increases from the surface on which the separation functional layer is formed to the other surface. Further, in any of these cases, a projected area diameter of the fine pore measured at the surface on which the separation functional layer is formed, by using an atomic force microscope, an electron microscope or the like, is preferably 1 nm or more and 100 nm or less. Particularly, it is preferred that the pore at the surface on which the separation functional layer is formed in the porous support layer has a projected area diameter of 3 nm or more and 50 nm or less in view of the reactivity in the interfacial polymerization and retention of the separation functional layer.

The thickness of the porous support layer is not particularly limited, but it is preferably in the range of 20 $\mu$m or more and 500 $\mu$m or less, and more preferably 30 $\mu$m or more and 300 $\mu$m or less for providing strength for the separation membrane, or other purpose.

The morphology of the porous support layer can be observed by using a scanning electron microscope, a transmission electron microscope or an atomic force microscope. For example, when the porous support layer is observed by using a scanning electron microscope, the observation may be conducted by peeling off the porous support layer from the substrate, and preparing a sample for observing the cross-section by cutting the porous support layer by freeze fracturing. This sample is thinly coated with platinum or platinum-palladium or ruthenium tetrachloride, preferably ruthenium tetrachloride, and observed at an acceleration voltage of 3 kV to 6 kV by using a high resolution field emission scanning electron microscope (UHR-FE-SEM). As the high resolution field emission scanning electron microscopes, Model S-900 electron microscope manufactured by HITACHI, LTD. can be employed. The layer thickness of the porous support layer and the projected area diameter on the surface can be measured by using the resulting electron micrograph.

The thickness of the porous support layer and the pore size are average values, and the thickness of the porous support layer is the average of 20 points obtained by observing the cross-section, and measuring 20 points at an interval of 20 $\mu$m in the direction perpendicular to the thickness direction of the membrane. The pore size is an average value of the projected area diameters obtained by measuring 200 holes.

Next, a method of forming the porous support layer will be described. The porous support layer can be produced, for example, by casting a solution of the polysulfone in N,N-dimethylformamide (hereinafter referred to as DMF) to a predetermined thickness on the substrate as described later, for example, a densely woven polyester or polyester nonwoven fabric, and then coagulating the cast solution in water by wet coagulation.

The porous support layer can be formed according to the method described in "Office of Saline Water, Research and Development Progress Report", No. 359 (1968). In addition, in order to obtain the desired morphology, the polymer concentration, the solvent temperature, and the poor solvent can be adjusted.

For example, a predetermined amount of polysulfone is dissolved in DMF to prepare a polysulfone resin solution having a predetermined concentration. Then, the polysulfone resin solution is applied onto the substrate made of the polyester fabric or nonwoven fabric at and substantially constant thickness, and after leaving the substrate for a predetermined period in the atmosphere to remove the solvent on the surface, the polysulfone is coagulated in the coagulation solution, and thereby, the porous support layer can be obtained.

<Substrate>

The separation membrane main body can have a substrate from the viewpoint of the strength of the separation membrane main body and the size stability. As the substrate, and fibrous substrate is preferably used in view of strength, provision of projections and depressions and fluid permeability.

Both of a long fiber nonwoven fabric and a short fiber nonwoven fabric can be preferably employed as the substrate. Particularly, since the long fiber nonwoven fabric has an excellent membrane-forming property, it can suppress the possibility that when a solution of a high molecular weigh polymer is cast, the solution permeates to a backside due to overpermeation, that the porous support layer is peeled off, that the membrane becomes non-uniform due to fuzz of the substrate, and that a defect such as a pinhole is produced. Further, when the substrate is made of the long fiber nonwoven fabric composed of thermoplastic continuous filaments, it can suppress the possibility that the membrane becomes non-uniform due to fuzz of the fibers in casting a solution of a high molecular weight compound, and a membrane defect is generated in comparison with the short fiber nonwoven fabric. Furthermore, since a tensile force is applied to a direction of membrane forming of the separation membrane when the separation membrane is continuously formed, it is preferred to use the long fiber nonwoven fabric having excellent dimensional stability as the substrate.

In the long fiber nonwoven fabric, it is preferred in point of formability and strength that fibers at the surface layer opposite to the porous support layer-side surface layer are more vertically oriented than those at the porous support layer-side surface layer. When such a structure is employed, it is preferred because the high effect of preventing membrane break is realized by maintaining strength, formability of a laminate including a porous support layer and a substrate at the time of providing projections and depressions for the separation membrane is improved, and the morphology of the projections and depressions at the separation membrane surface becomes stable.

More specifically, the fiber orientation degree of the long fiber nonwoven fabric at the surface layer opposite to the porous support layer-side surface layer is preferably 0° or more and 25° or less, and the difference between this fiber orientation degree and a fiber orientation degree at the porous support layer-side surface layer is preferably 10° or more and 90° or less.

The production step of the separation membrane or the production step of the element includes a heating step, and a phenomenon occurs in which the porous support layer or the separation functional layer is shrunk by heating. The shrinkage is significant particularly in a width direction for which a tensile force is not provided in a continuous membrane forming. When the membrane is shrunk, since a problem of dimensional stability or the like arises, a substrate having a small thermal change rate of dimension is desired. When the difference between the fiber orientation degree at the surface layer opposite to the porous support layer-side surface layer and the fiber orientation degree at the porous support layer-side surface layer is 10° or more and 90° or less in the nonwoven fabric, it is preferred since changes in a width direction due to heat can also be prevented.

Herein, the fiber orientation degree is an index of an orientation of fibers of a nonwoven fabric substrate constituting the porous support layer. Specifically, the fiber orientation degree is an average value of angles between a membrane-forming direction in continuously producing a membrane, i.e. a longitudinal direction of the nonwoven fabric substrate, and a longitudinal direction of the fibers constituting the nonwoven fabric substrate. That is, when the longitudinal direction of the fiber is parallel to the membrane-forming direction, the fiber orientation degree is 0°. When the longitudinal direction of the fiber is perpendicular to the membrane-forming direction, that is, parallel to a width direction of the nonwoven fabric substrate, the fiber orientation degree is 90°. Therefore, it is shown that the closer to 0° the fiber orientation degree is, the more the fibers are vertically oriented, and the closer to 90° the fiber orientation degree is, the more the fibers are horizontally oriented.

The fiber orientation degree is measured as follows. First, 10 small samples are taken at random from a nonwoven fabric. Then, the surface of the sample is photographed at a magnification of 100 times to 1000 times by using a scanning electron microscope. Ten fibers per sample are selected in the photographed image, and the longitudinal direction angles of the fibers at the time when the longitudinal direction of the nonwoven fabric is taken as 0° are measured. Herein, the longitudinal direction of the nonwoven fabric refers to a "machine direction" in producing the nonwoven fabric. Further, the longitudinal direction of the nonwoven fabric agrees with the membrane-forming direction of the porous support layer and the MD direction in the drawings. A CD direction in the drawings agrees with a "cross direction" in producing the nonwoven fabric.

Thus, angles of 100 fibers per nonwoven fabric are measured. An average value is calculated from the longitudinal direction angles of 100 fibers measured in this way. A value obtained by rounding the resulting average value to the closest whole number is the fiber orientation degree.

The thickness of the substrate is preferably such a value that the total thickness of the substrate and the porous support layer falls within the range of 30 μm or more and 300 μm or less, or the range of 50 μm or more and 250 μm or less.

(1-3) Channel Material on Permeate Side

<Overview>

A channel material having a compressive elasticity modulus of 0.1 GPa or more and 5.0 GPa or less is affixed to the substrate on the permeate-side surface of the separation membrane main body so as to form a flow path on the permeate side. The phrase "disposed so as to form a flow path on the permeate side" means that when the separation membrane is incorporated into a separation membrane element described later, a channel material is formed in such a way that permeate fluid having permeated the separation membrane main body can reach a water collection tube. A detail of a constitution of the channel material is as follows.

<Compressive Elasticity Modulus>

The compressive elasticity modulus of the channel material is preferably 0.1 GPa or more and 5.0 GPa or less. In the use in seawater desalination, an operation is conducted under high-pressure. Under high-pressure, since the channel material is compacted to narrow the flow path on the permeate side, the flow resistance is increased and the amount of water produced is likely to be reduced. When the compressive elasticity modulus of the channel material is 0.1 GPa or more, such a reduction of the amount of water produced can be suppressed. Further, when the compressive elasticity modulus of the channel material is extremely high, the channel material is easily broken when the separation membrane is wound. In contrast, when the compressive elasticity modulus of the channel material is 5.0 GPa or less, the deformation of the channel material at the time of pressurized filtration can be restricted, and the flow path can be formed stably.

The compressive elasticity modulus of the channel material can be determined by a slope of a linear portion of a stress-strain curve in a stress range in which the channel material is elastically deformed. More specifically, the results measured by measuring methods in Examples described later may satisfy the range described above.

Besides measurement of the compressive elasticity modulus, the amount of deformation of the channel material may be in the range described below in actually performing pressurized filtration. The channel material is suitable for application to the use in seawater desalination when the rate of deformation of the height of the channel material is 40% or less in conducting an operation under the conditions that a raw water temperature is 25°C or less and a pressure is 5.5 MPa or less.

The channel material on the permeate side can be applied to an element for brackish water when the rate of deformation of the height of the channel material is 30% or less in conducting an operation at a raw water temperature of 25°C or less and at a pressure of 2.5 MPa or less.

The rate of deformation is determined by calculating the formula: (height of channel material after operating under the above conditions)/(height of channel material before operating) x 100.

<bending resistance>

When the channel material is affixed to the separation membrane, the rigidity of the separation membrane itself is increased, but if the rigidity is too high, a winding property of the separation membrane for producing a separation membrane element is deteriorated, and therefore the channel material may be broken, or the functional layer of the separation membrane may be broken as the separation membrane is wound. Accordingly, the bending resistance of the separation membrane having the channel material affixed thereto is preferably 400 mm or less, more preferably 350 mm or less, and particularly preferably 200 mm or less.

The bending resistance is measured according to ISO 13934-1: 1999. That is, the bending resistance is measured by using a horizontal table having a horizontal plane and an inclined plane of 45° and using the following procedure. First, a segment of 25 mm in width is cut out from the separation membrane as a sample. Next, the sample is placed on the horizontal plane so that the separation functional layer is opposed to the horizontal plane, and one end of the sample is aligned with a demarcation between the inclined plane and the horizontal plane, and in this state, the other end of the sample is pressed down with a metal plate. Moreover, the metal plate is gently slid toward the demarcation between the inclined plane and the horizontal plane while pressing the sample down. The sample is extruded from the demarcation between the inclined plane and the horizontal plane as the metal plate is moved. The longer the extruded length is, the larger the flection of the sample becomes. The length (mm) of the extruded sample is measured at the time when a central part of a tip of the sample is brought into contact with the inclined plane due to the flection of the sample. The measured length is the bending resistance of the separation membrane.

<Constituent Component of Channel Material>

The channel material 31 is preferably formed of a material different from that of the separation membrane main body 2. The different material means a material having a composition different from that of a material used in the separation membrane main body 2. Particularly, the composition of the channel material 31 is preferably different from the composition of a surface of the separation membrane main body 2, on which the channel material 31 is formed, and is preferably different from the composition of any layer constituting the separation membrane main body 2.

A material constituting the channel material is not particularly limited to a specific substance, and a resin is preferably used for the material. Specifically, an ethylene-vinyl acetate copolymer resin, polyolefins such as polyethylene and polypropylene, and polyolefin copolymers are preferable in view of chemical resistance. Further, as a material of the channel material, it is possible to select polymers such as urethane resins, epoxy resins, polyethersulfone, polyacrylonitrile, polyvinyl chloride, polyvinylidene chloride, polyvinyl alcohol, ethylene-vinyl alcohol copolymer, polystyrene, styrene-acrylonitrile copolymer, styrene-butadiene-acrylonitrile copolymer, polyacetal, polymethyl methacrylate, methacryl-styrene copolymer, cellulose acetate, polycarbonate, polyethylene terephthalate, polybutadiene terephthalate and fluororesins (polychlorotrifluoroethylene, polyvinylidene fluoride, ethylene tetrafluoride, ethylene tetrafluoride-propylene hexafluoride copolymer, ethylene tetrafluoride-perfluoroalkoxyethylene copolymer, ethylene tetrafluoride-ethylene copolymer, etc.). These materials are used singly or as a mixture composed of two or more thereof. Particularly, thermoplastic resins can form a channel material having a uniform shape since it is easily formed.

As a material of the channel material, a composite material can also be applied. Examples of the composite material include materials containing the above-mentioned resin as a base material and further containing a filler. The compressive elasticity modulus of the channel material can be enhanced by adding a filler such as porous inorganic substances or the like to the base material. Specifically, silicate salts of alkaline-earth metals such as sodium silicate, calcium silicate and magnesium silicate; metal oxides such as silica, alumina and titanium oxide; carbonate salts of alkaline-earth metals such as calcium carbonate and magnesium carbonate; pure silica, silica powder, diatom earth, wollastonite, sepiolite, attapulgite, kaolin, clay, bentonite, gypsum, talc, or the like can be used as the filler. The amount of the filler is not particularly limited as long as the effect of the present invention is not impaired.

<Shape and Arrangement of Channel Material>

<<Overview>>

Tricot which has been widely used is a knitted fabric, and composed of yarns three-dimensionally crossing one another. That is, the tricot has a continuous structure as viewed two-dimensionally. When such tricot is applied as the channel material, the height of the flow path is smaller than the thickness of the tricot. That is, it is not possible to utilize all of the thickness of the tricot as the height of the flow path.

In contrast, the channel material 31 shown in Fig. 1 or the like is arranged so as not to overlay one another, which is an example of the constitution of the present invention. Therefore, all of the height (namely, thickness) of the channel material 31 of the present embodiment is utilized as the height of a groove of the flow path. Accordingly, when the channel material 31 of the present embodiment is applied, the height of the flow path is higher than that in the case of tricot having a thickness similar to the height of the channel material 31. That is, since the cross-sectional area of the flow path is larger, the flow resistance is smaller.

Further, in the embodiments shown in the respective drawings, a plurality of discontinuous channel materials 31 are affixed to one separation membrane main body 2. The term "discontinuous" refers to a state in which a plurality of channel materials are disposed at intervals. That is, when the channel material 31 in one separation membrane is peeled off from the separation membrane main body 2, a plurality of channel materials 31 which are separated from one another are obtained. In contrast, the member such as a net, tricot or a film shows a continuous integral shape even when being separated from the separation membrane main body 2.

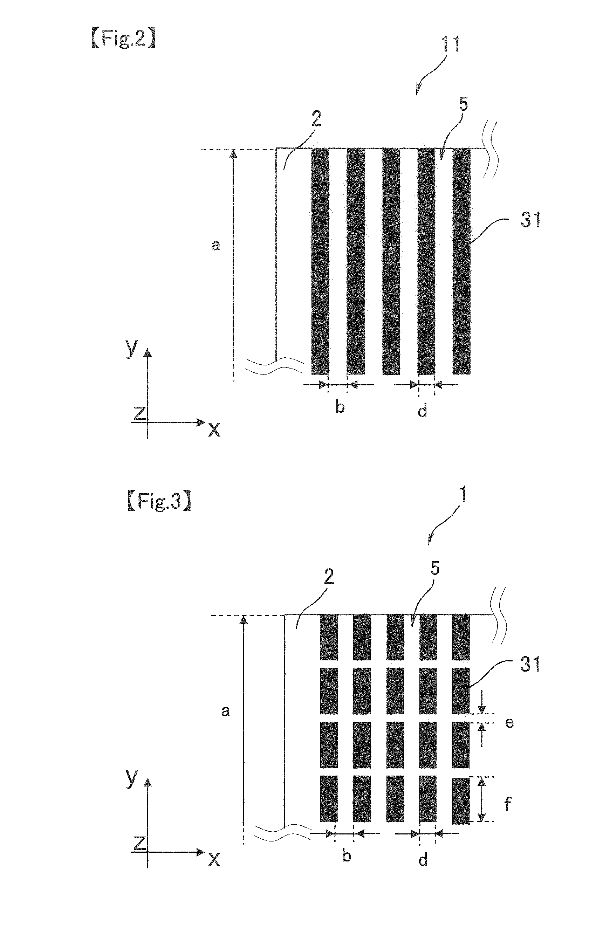

Since a plurality of discontinuous channel materials 31 are disposed, a pressure loss can be kept low when the separation membrane 1 is incorporated into a separation membrane element 100 described latter. In one example of such a constitution, the channel material 31 is discontinuously formed only in the first direction (length direction of the separation membrane) in Fig. 2, and the channel material 31 is discontinuously formed in both of the first direction (length direction of the separation membrane) and the second direction (width direction of the separation membrane) in Fig. 3.

In Fig. 2 and Fig. 3, a flow path 5 on the permeate side is formed in a space between the channel materials 31 adjacent to each other.

The separation membrane is preferably arranged such that the second direction agrees with the winding direction in the separation membrane element. That is, in the separation membrane element, it is preferred that the separation membrane is arranged such that the first direction (width direction of the separation membrane) is parallel to the axial direction of a water collection tube 6 and the second direction (length direction of the separation membrane) is perpendicular to the axial direction of the water collection tube 6.

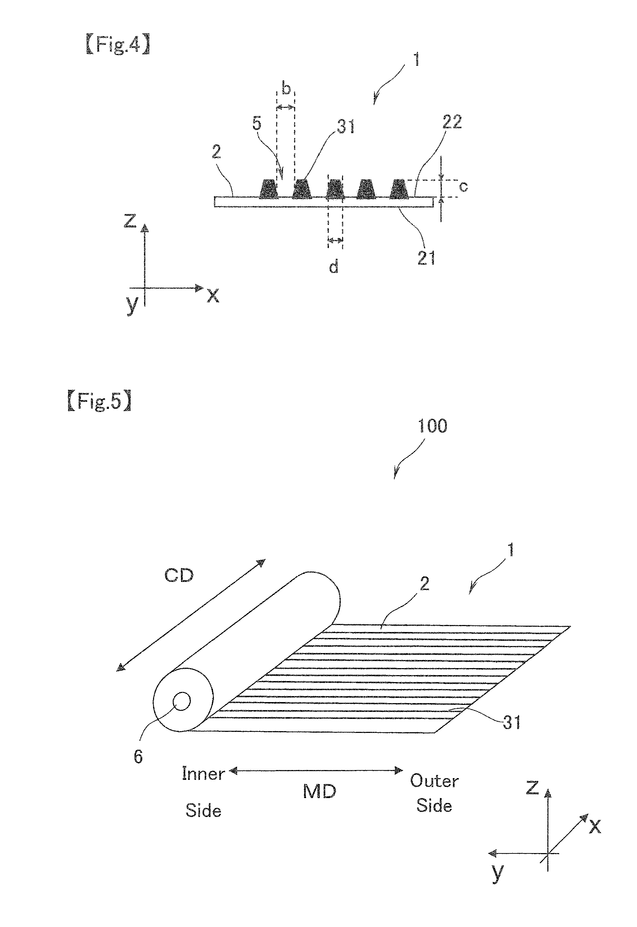

The channel material 31 is discontinuously disposed in the first direction, and in the embodiments shown in Fig. 2 and Fig. 5, the channel material 31 is continuously disposed in the second direction from one end to the other end of the separation membrane main body 2. That is, as shown in Fig. 5, when the separation membrane is incorporated into the separation membrane element, the channel material 31 is arranged such that the channel material is continuous from an inner end to an outer end of the separation membrane 1 in a winding direction. The inner side in the winding direction is a side close to the water collection tube in the separation membrane, and the outer side in the winding direction is a side away from the water collection tube in the separation membrane.

Fig. 5 is an illustrative drawing schematically showing a separation membrane element 100 formed by winding the separation membrane 1 around the water collection tube 6. In Fig. 5, the separation membrane 1 is shown as one surface of the separation membrane leaf. In the drawing, an arrow denoted by CD indicates the axial direction of the water collection tube 6 and the width direction of the separation membrane. Further, an arrow denoted by MD indicates the length direction of the separation membrane and the direction in which the separation membrane is wound around the water collection tube 6.

The matter that the channel material "is continuous in the second direction" comprehends both of the case where the channel material is disposed without discontinuity as shown in Fig. 2 and the case where the channel material is substantially continuous although it is discontinuous at some points as shown in Fig. 3. The morphology of "substantially continuous" preferably satisfies that the interval e between the channel materials (namely, the length of a discontinuous portion in the channel material) in the second direction is 5 mm or less. Particularly, the interval e more preferably satisfies 1 mm or less, and even more preferably satisfies 0.5 mm or less. Further, the total value of the intervals e included between the front-end and the tail-end of a row of the channel material aligned in the second direction is preferably 100 mm or less, more preferably 30 mm or less, and even more preferably 3 mm or less. Note that, in the embodiment of Fig. 2, the interval e is zero (0).

When the channel material 31 is disposed without discontinuity as shown in Fig. 2, falling of the membrane is suppressed at the time of pressurized filtration. The falling of the membrane means that the membrane falls into the flow path to narrow the flow path.

In Fig. 3, the channel material 31 is discontinuously formed not only in the first direction but also in the second direction. That is, the channel material 31 is disposed at intervals in the length direction. However, as described above, since the channel material 31 is substantially continuous in the second direction, falling of the membrane is suppressed. Further, when the channel material 31 which is discontinuous in two directions like this is disposed, a contact area between the channel material and the fluid is decreased, and therefore a pressure loss is reduced. This morphology can also be said to be in other words a constitution in which the flow path 5 is provided with branch points. That is, in the constitution shown in Fig. 3, the permeate fluid is divided by the channel material 31 while flowing through the flow path 5, and the divided flows can join into one in the downstream parts.

As described above, in Fig. 2, the channel material 31 is arranged such that the channel material 31 is continuous in the second direction from one end to the other end of the separation membrane main body 2. In Fig. 3, the channel material 31 is divided into a plurality of portions in the second direction, and these plural portions are arranged in a line from one end to the other end of the separation membrane main body 2.

The matter that the channel material "is arranged from one end to the other end of the separation membrane main body" comprehends both of the morphology in which the channel material is disposed up to the edge of the separation membrane main body 2 and the morphology in which the channel material is not disposed in some regions in the vicinity of the edge. That is, the channel material may be distributed over the second direction to such an extent that the flow path on the permeate side can be formed, and the channel material may not be disposed in some areas in the separation membrane main body. For example, the channel material does not need to be disposed at an area where the permeate-side surface is bonded to another separation membrane (an area where the permeate-side surface is in contact with another separation membrane, in other words). Further, a region not provided with the channel material may be arranged at some locations such as the end of the separation membrane for another specification or production reasons.

The channel material 31 can be almost uniformly distributed throughout the separation membrane main body also in the first direction. However, as with the distribution in the second direction, the channel material does not need to be disposed at an area where the permeate-side surface is bonded to another separation membrane. Further, a region not provided with the channel material may be arranged at some locations such as the end of the separation membrane for another specification or production reasons.

<< Dimensions of Separation Membrane Main Body and Channel Material >>

In Fig. 2 to Fig. 4, a to f indicate the following values.
a: Length of the separation membrane main body 2
b: Interval between the channel materials 31 in width direction of the separation membrane main body 2
c: Height of the channel material (difference in height between the channel material 31 and the permeate-side surface 22 of the separation membrane main body 2)
d: Width of the channel material 31
e: Interval between the channel materials in length direction of the separation membrane main body 2
f: Length of the channel material 31

For measurement of the values a, b, c, d, e and f, for example, a commercially available shape measurement system, microscope or the like can be used. Each value is determined by measuring 30 points or more in one separation membrane, summing these measured values, and dividing the sum by the number of points measured to calculate the average. Each value thus obtained as a result of measurement in at least 30 points may satisfy the ranges described below.

(Length a of Separation Membrane Main Body)

The length a is a distance from one end to the other end of the separation membrane main body 2 in the second direction (the length direction of the separation membrane). When the distance is not constant, the length a can be obtained by measuring the distance at locations of 30 points or more in one separation membrane main body 2 and calculating the average.

(Interval b between Channel Materials in First Direction)

The interval b between the channel materials 31 adjacent to each other in the first direction (the width direction of the separation membrane) corresponds to the width of the flow path 5. When the width of one flow path 5 is not constant in a cross-section, that is, when side surfaces of the two channel materials 31 adjacent to each other are not parallel to each other, the mean value of the maximum value and the minimum value of the width of one flow path 5 is measured in a cross-section, and the average value of the mean values is calculated. When the channel material 31 shows a trapezoidal shape, in which an upper portion is narrow and a lower portion is wide, in a cross-section perpendicular to the second direction as shown in Fig. 4, first, a distance between upper portions and a distance between lower portions of the two channel materials 31 adjacent to each other are measured, and the average value thereof is calculated. The interval between the channel materials 31 is measured in the cross-sections of 30 arbitrary points or more, and the average value is calculated in each cross-section. Then, the arithmetic mean value of the average values thus obtained is further calculated, and thereby, the interval b is calculated.

The pressure loss is reduced with an increase in the interval b, but the falling of the membrane easily occurs. Conversely, the falling of the membrane hardly occurs with a decrease in the interval b, but the pressure loss is increased. In consideration of the pressure loss, the interval b is preferably 0.05 mm or more, 0.2 mm or more, or 0.3 mm or more. Further, from the viewpoint of suppressing the falling of the membrane, the interval b is preferably 5 mm or less, 3 mm or less, 2 mm or less, or 0.8 mm or less.

These upper limits and lower limits can be combined freely. For example, the interval b is preferably 0.2 mm or more and 5 mm or less, and when the interval b falls within the range, the pressure loss can be reduced while the falling of the membrane is suppressed. The interval b is more preferably 0.05 mm or more and 3 mm or less, and 0.2 mm or more and 2 mm or less, and even more preferably 0.3 mm or more and 0.8 mm or less.

(Height c of Channel Material)

The height c is a height difference between the channel material and the surface of the separation membrane main body. As shown in Fig. 4, the height c is a difference in height between the highest portion of the channel material 31 and the permeate-side surface of the separation membrane main body in a cross-section perpendicular to the second direction. That is, in the height, the thickness of the channel material, with which the substrate is impregnated, is not considered. The height c is a value obtained by measuring the heights of the channel materials 31 of 30 points or more and averaging the measurements. The height c of the channel material may be determined by observation of the cross-section of the channel material in the same plane, or may be determined by observation of the cross-section of the channel material in a plurality of planes.

The height c can be appropriately selected depending on the use conditions and purpose of the element, and it may be set, for example, as follows.

When the height c is larger, the flow resistance is reduced. Therefore, the height c is preferably 0.03 mm or more, 0.05 mm or more, or 0.1 mm or more. On the other hand, when the height c is smaller, the number of the membranes loaded in an element is increased. Therefore, the height c is preferably 0.8 mm or less, 0.4 mm or less, or 0.32 mm or less. These upper limits and lower limits can be combined, and for example, the height c is preferably 0.03 mm or more and 0.8 mm or less (30 $\mu$m or more and 800 $\mu$m or less), preferably 0.05 mm or more an 0.4 mm or less, and more preferably 0.1 mm or more and 0.32 mm or less.

Further, the difference in height between two channel materials adjacent to each other is preferably small. When the height difference is large, the distortion of the separation membrane occurs at the time of pressurized filtration, and therefore a defect may be generated in the separation membrane. The difference in height between two channel materials adjacent to each other is preferably 0.1 mm or less (100 $\mu$m or less), more preferably 0.06 mm or less, and even more preferably 0.04 mm or less.

For the same reason, a maximum height difference among all of the channel materials disposed in the separation membrane is preferably 0.25 mm or less, particularly preferably 0.1 mm or less, and even more preferably 0.03 mm or less.

(Width d of Channel Material)

The width d of the channel material 31 is measured as follows. First, a mean value of the maximum value and the minimum value of the width of one channel material 31 is calculated in a cross-section perpendicular to the first, direction (the width direction of the separation membrane). That is, in the channel material 31 in which an upper portion is narrow and a lower portion is wide as shown in Fig. 4, the width of the lower portion and the width of the upper portion of the channel material are measured, and the average value thereof is calculated. The width d per membrane can be calculated by calculating such an average in the cross-section of at least 30 points, and calculating the arithmetic mean thereof.

The width d of the channel material 31 is preferably 0.2 mm or more, and more preferably 0.3 mm or more. When the width d is 0.2 mm or more, even if pressure is applied to the channel material 31 during the operation of the separation membrane element, a shape of the channel material can be maintained and the flow path on the permeate side is formed stably. The width d of the channel material is preferably 2 mm or less, and more preferably 1.5 mm or less. When the width d is 2 mm or less, the flow path on the permeate side can be adequately secured.

Since the width of the channel material is larger than the interval b between the channel materials in the second direction, pressure applied to the channel material can be dispersed.

The channel material 31 is formed in such a way that the length thereof is larger than the width thereof. Such a long channel material 31 is also referred to as a "wall-like body".

(Interval e between Channel Materials in Second Direction)

The interval e between the channel materials 31 in the second direction is the shortest distance between the channel materials 31 adjacent to each other in the second direction (the length direction the separation membrane). As shown in Fig. 2, when the channel material 31 is continuously disposed from one end to the other end of the separation membrane main body 2 in the second direction (from the inner end to the outer end in the winding direction in the separation membrane element), the interval e is 0 mm. Further, as shown in Fig. 3, when the channel material 31 is discontinuous in the second direction, the interval e is preferably 5 mm or less, more preferably 1 mm or less, and even more preferably 0.5 mm or less. When the interval e falls within the above-mentioned range, the mechanical load on the membrane is small even if falling of the membrane takes place, and the pressure loss due to the blockage of the flow path can be relatively small. The lower limit of the interval e is 0 mm.

(Length f of Channel Material)

The length f of the channel material 31 is the length of the channel material 31 in the length direction (that is, the second direction) of the separation membrane main body 2. The length f is determined by measuring the lengths of the channel materials 31 of 30 or more in one separation membrane 1, and calculating the average of the measurements. The length f of the channel material may be the length a of the separation membrane main body or less. When the length f of the channel material is equal to the length a of the separation membrane main body, this means that the channel material 31 is continuously disposed from the inner end to the outer end in the winding direction of the separation membrane 1. The length f is preferably 10 mm or more, and more preferably 20 mm or more. When the length f is 10 mm or more, a flow path is secured even under pressure.

(Relation among Dimensions a to f)

As described above, the channel material of the present embodiment can be reduced in pressure loss lower than a conventional channel material having a continuous morphology such as tricot. In other words, in accordance with the technology of the present embodiment, the leaf length can be longer than that of a conventional technology even when the pressure loss is equal to that of the conventional technology. When the leaf length can be increased, the number of leaves can be reduced.

The number of leaves can be particularly reduced by setting the dimensions a to f so as to satisfy the following mathematical expression:

i) $a^2f^2(b + c)^2(b + d) \times 10^{-6}/b^3c^3(e + f)^2 \leq 1400$,
ii) $850 \leq a \leq 7000$,
iii) $b \leq 2$,
iv) $c \leq 0.5$, and
v) $0.15 \leq df/(b + d) (e + f) \leq 0.85$.

By thus arranging the channel material in a predetermined morphology on the permeate side, the pressure loss is reduced lower than a conventional channel material having a continuous morphology such as tricot, and therefore the leaf length can be longer. For this reason, it is possible to provide a separation membrane element having excellent separation performance even when the number of leaves per separation membrane element is reduced.

In addition, a millimeter (mm) can be employed for the unit of length in the above formulae.

(Shape)

The shape of the channel material is not particularly limited, but a shape, which reduces the flow resistance in the flow path and stabilizes the flow path during permeation of the fluid, can be selected. In these points, the shape of the channel material may be in the shape of a straight column, a trapezoid, a curved column, or a combination thereof in any of cross-section perpendicular to a plane direction of the separation membrane.

When the cross-section shape of the channel material is trapezoidal, if the difference in length between an upper base and a lower base of the trapezoid is too large, the falling of the membrane at the time of pressurized filtration easily occurs at the membrane being in contact with the shorter base. For example, when the upper base of the channel material is shorter than the lower base, the width at the upper portion is larger than that at the lower portion in the flow path between the upper base and the lower base. Therefore, the upper membrane easily falls downward. Thus, in order to suppress such falling of the membrane, the ratio of the upper base length to the lower base length of the channel material is preferably 0.6 or more and 1.4 or less, and more preferably 0.8 or more and 1.2 or less.

The shape of the channel material is preferably in the shape of a straight column perpendicular to a separation membrane surface described later from the viewpoint of reducing the flow resistance. Further, the channel material may be formed so as to be smaller in width in the upper portion, or may be formed so as to be larger in width in the upper portion, or may be formed so as to be constant in width irrespective of the height from the separation membrane surface.

However, the upper side of a cross-section of the channel material may be rounded off as far as the crushing of the channel material at the time of pressurized filtration is not significant.

The channel material can be formed of a thermoplastic resin. When the channel material is made of the thermoplastic resin, the shape of the channel material can be freely adjusted so as to satisfy the conditions of required separation properties or permeation performance by changing a processing temperature and a type of the thermoplastic resin to be selected.

In addition, the shape of the channel material in the plane direction of the separation membrane may be linear as a whole, as shown in Fig. 2 and Fig. 3, or may be, for example, a curved line, a sawtooth shape or a wavy line as another shape. Further, in these shapes, the channel material may be in the shape of a broken line or a dot. The shape of the channel material in the plane direction of the separation membrane is preferably in the shape of a dot or a broken line from the viewpoint of reducing the flow resistance, but in this case, the number of the location, where the falling of the membrane at the time of pressurized filtration is generated, increases due to discontinuity of the channel material. Thus, the shape may be appropriately selected according to use of the separation membrane.

Further, the channel materials adjacent to each other may be arranged in nearly parallel with each other when the shape of the channel material in the plane direction of the separation membrane is linear. The term "arranged in nearly parallel" comprehends, for example, that the channel materials do not cross one another on the separation membrane, that the angle between the longitudinal directions of two channel materials adjacent to each other is 0° or more and 30° or less, that the above-mentioned angle is 0° or more and 15° or less, and that the above-mentioned angle is 0° or more and 5° or less.

Further, the angle which is formed by the longitudinal direction of the channel material with the axial direction of the water collection tube is preferably 60° or more and 120° or less, more preferably 75° or more and 105° or less, and even more preferably 85° or more and 95° or less. When the angle which is formed by the longitudinal direction of the channel material with the axial direction of the water collection tube is within the above-mentioned range, the permeate water can be efficiently collected in the water collection tube.

In order to form the flow path stably, it is preferred to suppress falling of the separation membrane main body at the time when the separation membrane main body is pressurized in the separation membrane element. In order to suppress falling, it is preferred that an area of contact between the separation membrane main body and the channel material is large, that is, that the area of the channel material (a projected area to a membrane surface of the separation membrane main body) is large relative to the area of the separation membrane main body. On the other hand, in order to reduce the pressure loss, it is preferred that a cross-sectional area of the flow path is large. In order to secure a large cross-sectional area of the flow path while a large contact area, which is perpendicular to the cross-section of the flow path in the longitudinal direction of the flow path, is secured between the separation membrane main body and the channel material, the cross-section shape of the flow path is preferably in the form of a concave lens. Further, the channel material 31 may be in the shape of a straight column which does not change in width in the cross-section shape in a direction perpendicular to the winding direction. Further, the channel material 31 may be in the shape of a trapezoidal wall-like body, an elliptic column, an elliptic cone, a quadrangular pyramid or a hemisphere, which changes in width in the cross-section shape in a direction perpendicular to the winding direction as long as the shape does not affect the separation membrane performance.

The shape of the channel material is not limited to the shapes shown in Fig. 1 to Fig. 3. When the channel material is arranged on the permeate-side surface of the separation membrane main body by affixing a melted material thereto, like a hot-melt method, the shape of the channel material can be freely adjusted so as to satisfy the conditions of required separation properties or permeation performance by changing a processing temperature or a type of a resin for hot-melt to be selected.

In Fig. 1 to Fig. 3, a planar shape of the channel material 31 is linear in the length direction. However, the channel material 31 can be modified to another shape as long as the channel material 31 is convex relative to the surface of the separation membrane main body 2, and a desired effect as a separation membrane element is not impaired. That is, the shape in the plane direction of the channel material may be in the form of a curve line, a wavy line, and the like. Further, a plurality of channel materials contained in one separation membrane may be formed in such a way that at least one of the width and the length is different from one another.

(Projected Area Ratio)

The projected area ratio of the channel material to the permeate-side surface of the separation membrane is preferably 0.03 or more and 0.85 or less, more preferably 0.15 or more and 0.85 or less, even more preferably 0.2 or more and 0.75 or less, and further preferably 0.3 or more and 0.6 or less, particularly from the viewpoint of reducing the flow resistance in the flow path on the permeate side and forming the flow path stably. The projected area ratio is a value obtained by dividing a projected area of the channel material obtained when the separation membrane is cut out to the size of 5 cm × 5 cm and the cut out piece is projected to a plane parallel to a face direction of the separation membrane by the cut out area (25 cm$^2$). Further, this value can also be expressed by the above-mentioned formula v) df/(b + d) (e + f).

(Defect Rate)

Water having permeated the separation membrane passes through the flow path 5 on the permeate side and is collected in the water collection tube 6. Water, which has permeated a region away from the water collection tube, namely, a region near the outer end in the winding direction (region close to an end on right side in Fig. 5) in the separation membrane, joins water having permeated a region on an inner side than the above region in the winding direction during flowing toward the water collection tube 6, and flows toward the water collection tube 6. Accordingly, in the flow path on the permeate side, the amount of water present in a portion away from the water collection tube 6 is small.

Therefore, even when the channel material on the permeate side is not present in the region near the outer end in the winding direction and the flow resistance in the region is high, the influence on the amount of water produced of the whole separation membrane element is little. For the same reason, the influence on the amount of water produced of the separation membrane element is little even when, in the region near the outer end in the winding direction, formation accuracy of the channel material is low and a resin for forming the channel material is continuously applied in the first direction (the width direction of the separation membrane). In the region, the same is true in the case where the resin is applied without a space in the face direction (x-y plane) of the separation membrane main body.

Therefore, the proportion of a distance from the outer end in the winding direction of the separation membrane main body 2 to the outer end in the winding direction of the channel material 31 on the permeate side, that is, a length L3 in the second direction (the length direction of the separation membrane) of a region R3 which is a region disposed at the outer end in the winding direction of the separation membrane main body 2, in which the flow path on the permeate side is not formed, to a Length L1 (corresponding "a" described above) in the second direction of the whole separation membrane is preferably 0% or more and 30% or less, more preferably 0% or more and 10% or less, and particularly preferably 0% or more and 3% or less. This proportion is referred to as a defect rate.

The defect rate is represented by (L3/L1) × 100 in Fig. 6.

In addition, in Fig. 6 is shown a morphology in which the channel material on the permeate side is not disposed in the region R3 for convenience of explanation. However, the region R3 may be a region provided with a channel material on the permeate side continuously disposed in the width direction.

Fig. 6 is a sectional view in which the outer end in the winding direction of the separation membrane main body 2 and the channel material 31 on the permeate side is cut in the length direction of the channel material 31 on the permeate side. In Fig. 6, the channel material 31 on the permeate side is affixed to the separation membrane main body 2, and extends to near the outer end in the winding direction of the separation membrane main body 2. In addition, in Fig, 6 is shown a morphology in which the channel material 31 on the permeate side is continuously disposed in the length direction for convenience of explanation, and as described above, various morphologies described above are applied as the channel material 31 on the permeate side.

In the drawing, a region in which the channel material on the permeate side is disposed is denoted by R2, and a region in which the channel material 31 on the permeate side is not disposed is denoted by R3. Further, the length in the MD direction of the separation membrane main body 2 is denoted by L1, the length in the MD direction of the channel material 31 on the Permeate side (i.e., the length of the region R2) is denoted by L2, and the length in the MD direction of the region R3, in which the channel material 31 on the permeate side is not present, is denoted by L3. Herein, the MD direction represents the length direction of the separation membrane and the winding direction of the separation membrane.

[2. Separation Membrane Element]

(2-1) Overview

As shown in Fig. 5, the separation membrane element 100 includes the water collection tube 6, and the separation membrane 1 having any of the constitutions described above and wound around the water collection tube 6.

(2-2) Separation Membrane

<Overview>

The separation membrane 1 is wound around the water collection tube 6 and arranged such that the width direction of the separation membrane is along the axial direction of the water collection tube 6. Consequently, the separation membrane 1 is arranged such that the length direction is along the winding direction.

Therefore, the channel material 31, a wall-like body, is discontinuously disposed at least along the axial direction of the water collection tube 6 on the permeate-side surface 22 of the separation membrane 1. That is, the flow path 5 is formed so as to be continuous from the outer end to the inner end of the separation membrane in the winding direction. Consequently, permeate water easily reaches a central tube, or the flow resistance is reduced, and therefore a large amount of water produced is obtained.

The "inner side in the winding direction" and the "outer side in the winding direction" are as shown in Fig. 5. That is, the "inner end in the winding direction" and the "outer end in the winding direction" correspond to an end close to the water collection tube 6 in the separation membrane 1 and an end away from the water collection tube 6 in the separation membrane 1, respectively.

As described above, the channel material does not need to reach an edge of the separation membrane, and therefore the channel material may not be disposed, for example, at the outer end of an envelope-like membrane in the winding direction and at an end of an envelope-like membrane in the axial direction of the water collection tube.

<Membrane Leaf and Envelope-like Membrane>

As shown in Fig. 1, the separation membrane constitutes a membrane leaf 4 (may be referred to simply as "leaf" herein). The separation membrane 1 is arranged so as to oppose the feed-side surface 21 thereof to the feed-side surface 71 of another separation membrane 7 across a channel material on the feed side (not shown) in the leaf 4. In the separation membrane leaf 4, a flow path on the feed side is formed between the feed-side surfaces of the separation membranes which face each other.

By further overlaying the two membrane leaves 4, the separation membrane 1 forms an envelope-like membrane with the separation membrane 7 of the other membrane leaf, which is opposed to the permeate-side surface 22 of the separation membrane 1. In the envelope-like membrane, a space between the permeate-side surfaces facing each other is opened at only one inner side in the winding direction in a rectangular shape of the separation membrane, and sealed at other three sides in order to flow the permeate water into the water collection tube 6. The permeate water is isolated from the raw water by the envelope-like membrane.

Examples of the sealing include a morphology of adhesion using an adhesive, hot-melt or the like; a morphology of melt adhesion by heating, laser or the like; and a morphology of sandwiching of a sheet made from rubber. The sealing by adhesion is particularly preferred since it is the most convenient and has a large effect.

Further, the inner end in the winding direction is closed by folding or sealing at the feed-side surface of the separation membrane. When the feed-side surface of the separation membrane is not folded but sealed, deflection at the end of the separation membrane is hardly generated. By suppressing the generation of the deflection near a crease, it is possible to suppress spaces generated between separation membranes in winding the separation membrane, and the occurrence of leakage due to the spaces.

By thus suppressing the occurrence of the leakage, the recovery rate of the envelope-like membrane is improved. The recovery rate of the envelope-like membrane is determined by the following procedure. That is, an air leakage test of the separation membrane element is conducted in water, and the number of the envelope-like membranes with the leakage is counted. The ratio (number of envelope-like membranes with air leakage)/(number of envelope-like membranes subjected to evaluation) is calculated as the recovery rate of the envelope-like membrane based on the results of counting.

The specific procedure of the air leakage test is as follows. One end of a central tube of the separation membrane element is blocked, and air is introduced from the other end. The introduced air passes through the holes of the water collection tube and reaches the permeate side of the separation membrane. However, when the deflection of the separation membrane is generated near the crease due to the insufficient folding of the separation membrane and hence spaces are present near the crease as described above, the air moves through such spaces. As a consequence, the air moves to the feed side of the separation membrane, and the air reaches the water from the end (feed side) of the separation membrane element. In this way, the air leakage can be checked as the generation of air bubbles.

When the separation membrane leaf is formed by folding, the longer the leaf is (that is, the longer the original separation membrane is), the longer the time required to fold the separation membrane is. However, by sealing the feed-side surface of the separation membrane not by folding, an increase in production time can be suppressed even when the leaf is long.

In addition, in the separation membrane leaf and the envelope-like membrane, the separation membranes (separation membranes 1 and 7 in Fig. 1) opposed to each other may have the same constitution, or may have a different constitution. That is, in the separation membrane element, since it may be sufficient to disposed the above-mentioned channel material on the permeate side on at least one of two permeate-side surfaces facing each other, the separation membrane provided with the channel material on the permeate side and the separation membrane not provided with the channel material on the permeate side may be alternately overlaid. However, for convenience of explanation, in the separation membrane element and descriptions concerning the separation membrane element, the "separation membrane" includes a separation membrane not provided with the channel material on the permeate side (for example, a membrane having the same constitution as in the separation membrane main body).

The separation membranes opposed to each other at the permeate-side surface or feed-side surface may be two separate membranes or may be one membrane folded.

(2-3) Flow Path on Permeate Side

As described above, the separation membrane 1 includes the channel material 31 on the permeate side. The flow path on the permeate side is formed on the inner side of the envelope-like membrane, that is, between the permeate-side surfaces of the separation membranes facing each other, by the channel material 31 on the permeate side.

(2-4) Flow Path on Feed Side

(Channel Material)

The separation membrane element 100 includes a channel material (not shown), in which the projected area ratio thereof to the separation membrane 1 is more than 0 and less than 1, between the feed-side surfaces of the separation membranes facing each other. The projected area ratio of the channel material on the feed side to the separation membrane 1 is preferably 0.03 or more and 0.50 or less, more preferably 0.10 or more and 0.40 or less, and particularly preferably 0.15 or more and 0.35 or less. When the projected area ratio is 0.03 or more and 0.50 or less, the flow resistance can be relatively kept low. Herein, the projected area ratio is a value obtained by dividing a projected area of the channel material on the feed side obtained when the separation membrane and the channel material on the feed side are cut out to the size of 5 cm $\times$ 5 cm and the cut out channel material on the feed side is projected to a plane parallel to a face direction of the separation membrane by the cut out area.

The height of the channel material on the feed side is preferably more than 0.5 mm and 2.0 mm or less, and more preferably 0.6 mm or more and 1.0 mm or less in consideration of the balance between various performances and the operation cost as described later.

The shape of the channel material on the feed side is not particularly limited, and it may have a continuous morphology, or may have a discontinuous morphology. Examples of the channel material having a continuous morphology include members such as a film and a net. The term "continuous morphology" used herein means that the channel material is substantially continuous through the length of the channel material. The continuous morphology may include some locations where parts of the channel material are discontinuous to the extent not causing disadvantage such as a decrease in the amount of water produced. Further, the definition of "discontinuous" is as is described concerning the channel material on the permeate side. In addition, a material of the channel material on the feed side is not particularly limited, and it may be a material which is the same as or different from that of the separation membrane.

(Processing of Projections and Depressions)

Further, it is possible to provide the height difference for the feed side of the separation membrane by using methods such as embossing, isostatic pressing, and calendering in place of disposing the channel material on feed side on the feed-side surface of the separation membrane.

Examples of the embossing method include roll embossing and the like. The pressure and the temperature used in the embossing can be adequately determined depending on the melting point of the separation membrane. For example, when the separation membrane has a porous support layer containing an epoxy resin, the embossing is preferably performed at a linear pressure of 10 kg/cm or more and 60 kg/cm or less, and at a heating temperature of 40°C or more and 150°C or less. When the separation membrane has a porous support layer containing a heat resistant resin such as polysulfone, the embossing is preferably performed at a linear pressure of 10 kg/cm or more and 70 kg/cm or less, and at a roll heating temperature of 70°C or more and 160°C or less. In the case of roll embossing, the embossed separation membrane is preferably taken up at a speed of 1 m/minute or more and 20 m/minute or less in any case.

In the case of embossing the shape of the pattern provided on the roll is not particularly limited, but it is important to reduce the flow resistance in the flow path and stabilize the flow path during supplying of the fluid to the separation membrane element and permeation of the fluid. In view of these points, examples of the shape of the pattern observed from above the surface of the separation membrane include oval, circle, ellipse, trapezoid, triangle, rectangle, square, parallelogram, rhombus, and indeterminate forms, and three dimensionally, the shape observed from above the surface, which has a cross-sectional size the same, or reducing or increasing with height, is used.

The height difference of the feed-side surface of the separation membrane, which can be provided by embossing, can be freely adjusted by changing the pressure and heating conditions in such a way that separation properties and water permeation performance satisfy the required conditions. However, when the height difference of the feed-side surface of the separation membrane is too large, the number of the membrane leaves, which can be loaded in a vessel in forming into a separation membrane element, is reduced despite a decrease in the flow resistance. When the height difference is small, the flow resistance in the flow path is increased, and the separation properties and water permeation performance are deteriorated. Therefore, the water production capability of the element is deteriorated, and hence, the operation cost for increasing the amount of the water produced is increased.

Accordingly, in the separation membrane, the height difference of the feed-side surface of the separation membrane is preferably more than 0.5 mm and 2.0 mm or less, and more preferably 0.6 mm or more and 1.0 mm or less in consideration of the balance between various performances and the operation cost as described above.

The height difference of the feed-side surface of the separation membrane can be determined by the same technique as in the height difference of the permeate side of the separation membrane described above.

The width of the groove is preferably 0.2 mm or more and 10 mm or less, and more preferably 0.5 mm or more and 3 mm or less.

It is preferred to appropriately design a pitch so as to be one-tenth or more and fifty times or less of the width of the groove. The width of the groove is the width of the depression in the surface having the height difference, and the pitch of the groove is the horizontal distance between the highest point of the surface having the height difference to the highest point of the adjacent high area.

The projected area ratio of a portion which becomes convex by embossing is preferably 0.03 or more and 0.5 or less, more preferably 0.10 or more and 0.40 or less, and particularly preferably 0.15 or more and 0.35 or less for the same reason as in the channel material on the feed side.

The "height difference" in the surface of the separation membrane is a height difference between the surface of the separation membrane main body and the apex of the channel material (namely, the height of the channel material), or a height difference between projection and depression when the separation membrane main body is provided with projections and depressions.

(2-5) Water Collection Tube

The water collection tube 6 may be configured in such a way that the permeate water flows through the tube, and a material, a shape, a size thereof and the like are not particularly limited. As the water collection tube 6, for example, a cylindrical member having a side surface provided with a plurality of holes is used.

(2-6) First Embodiment

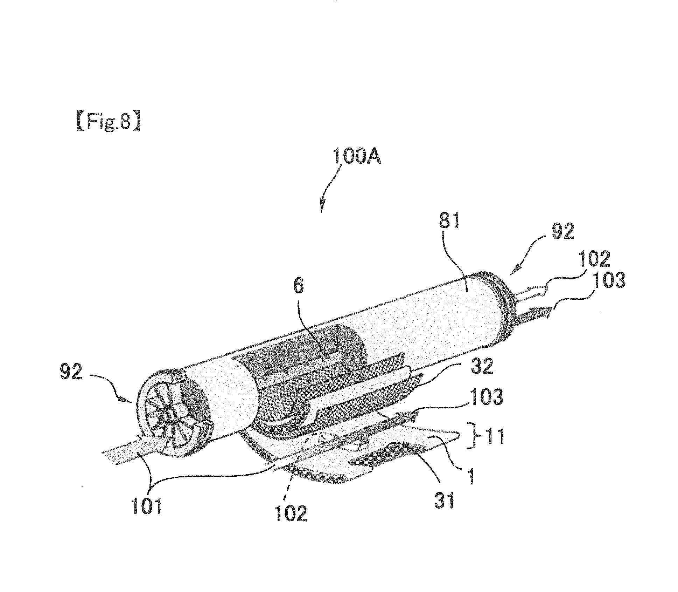

As a more specific embodiment, a first to third embodiment of separation membrane elements 100A, 100B and 100C are shown in Fig. 8 to Fig. 10. Fig. 8 is an illustrative drawing showing the separation membrane element 100A of the first embodiment in the form of partial break, and a plurality of separation membranes 1 wound around the water collection tube 6. The separation membrane element 100A further has the following constitution in addition to the constitution described above.

That is, the separation membrane element 100A includes end plates 92 with holes at both ends (that is, a first end and a second end) thereof. Further, in the separation membrane element 100A, a case body 81 is wound around an outer periphery of the wound separation membrane (hereinafter, referred to as a "wound body").

In addition, while an end plate 91 without a hole described later does not include holes through which raw water can pass, the end plate 92 with holes includes a plurality of holes through which raw water can pass.

Further, the separation membrane 1 forms an envelope-like membrane 11, and a channel material 31 on the permeate side is arranged on the inner side of the envelope-like membrane 11 as described above. A channel material 32 on the feed side is arranged between the envelope-like membranes 11.

In addition, for convenience sake, in Fig. 8 to Fig. 10, the channel material 31 on the permeate side is shown in the shape of a dot, but as described above, the shape of the channel material on the permeate side is not limited to this shape.

Next, water treatment using the separation membrane element 100A will be described. Raw water 101 supplied from the first end of the separation membrane element 100A passes through the holes of the end plate 92 and flows into the flow path on the feed side. In this way, the raw water 101 brought into contact with the feed-side surface of the separation membrane 1 is separated into permeate water 102 and concentrate water 103 by the separation membrane 1. The permeate water 102 passes through the flow path on the permeate side and flows into the water collection tube 6. The permeate water 102 having passed through the water collection tube 6 flows out of the separation membrane element 100A through the second end of the separation membrane element 100A. The concentrate water 103 passes through the flow path on the feed side and flows out of the separation membrane element 100A through the holes of the end plate 92 disposed at the second end.

(2-7) Second Embodiment

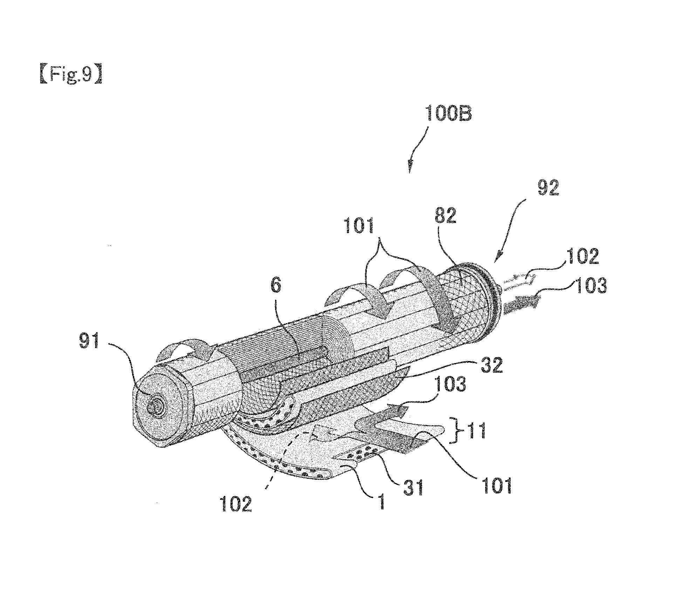

In reference to Fig. 9, the separation membrane element 100B of the present embodiment will be described. Here, constituent elements previously described are designated by like reference signs, and descriptions thereof are omitted.

The separation membrane element 100B includes an end plate 91 which is disposed at the first end and does not have holes, and an end plate 92 which is disposed at the second end and has holes. Further, the separation membrane element 100B includes a porous member 82 further wound around the outermost surface of the wound separation membrane 1.

As the porous member 82, a member having a plurality of pores through which raw water can pass is used. These pores provided for the porous member 82 may translate to a supply port of raw water. A material, a size, a thickness and rigidity of the porous member 82 are not particularly limited as long as the porous member has a plurality of pores. A membrane area per unit volume of the separation membrane element can be increased by employing a member having a relatively small thickness as the porous member 82.

The thickness of the porous member 82 is, for example, 1 mm or less, 0.5 mm or less, or 0.2 mm or less. Further, the porous member 82 may be a member having plasticity or flexibility, which can be deformed so as to be along a shape of periphery of the wound body. More specifically, a net, a porous film or the like can be applied to the porous member 82. The net and the porous film may be formed into a tube shape so that the wound body can be housed in the interior thereof, or may be a long material wound around the wound body.

The porous member 82 is disposed on the outer periphery of the separation membrane element 100B. Since the porous member 82 is thus disposed, the pores are located at the outer periphery of the separation membrane element 100B. It can be said that the "outer periphery" is also a portion of a whole outer periphery of the separation membrane element 100B particularly except for the surface of the first end and the surface of the second end. In the present embodiment, the porous member 82 is arranged so as to cover almost entirely the outer periphery of the wound body.

In accordance with the present embodiment, the raw water is supplied from the outer periphery of the separation membrane element 100B (the outer periphery of the wound body). Therefore, it is possible to suppress the deformation (the so-called telescope) of the wound body due to the extrusion of the wound separation membrane 1 or the like in a longitudinal direction even when the separation membrane element 100B is repeatedly operated, or even when the separation membrane element 100B is operated under a condition of high pressure. Moreover, in the present embodiment, since the raw water is supplied from a space between a pressure vessel (not shown) and the separation membrane element, the occurrence of abnormal retention of the raw water is suppressed.

In the separation membrane element 100B, since the end plate at the first end is the end plate 91 without holes, the raw water does not flow into the separation membrane element 100B from the surface of the first end. The raw water 101 is supplied from the outer periphery of the separation membrane element 100B to the separation material 1 through the porous member 82. The raw water 101 thus supplied is separated into the permeate water 102 and the concentrate water 103 by the separation membrane. The permeate water 102 passes through the water collection tube 6 and is drawn out of the second end of the separation membrane element 100B. The concentrate water 103 passes through the holes of the end plate 92 with holes of the second end, and flows out of the separation membrane element 100B.

(2-8) Third embodiment

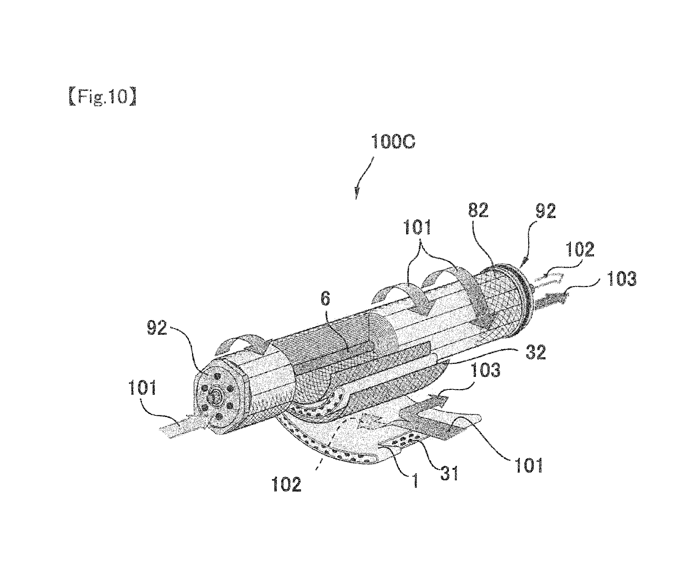

In reference to Fig. 10, the separation membrane element 100C of the present embodiment will be described. Here, constituent elements previously described are designated by like reference signs, and descriptions thereof are omitted.

The separation membrane element 100C is the same as the separation membrane element of the second embodiment except for including end plates 92 which are disposed at the first end and the second end respectively, and have holes. Further, the separation membrane element 100C includes a porous member 82 as with the separation membrane element 100B.

By virtue of this constitution, in the present embodiment, the raw water 101 is supplied not only from the outer periphery of the separation membrane element 100C to the wound body through the pores of the porous member 82, but also from the first end of the separation membrane element 100C to the wound body through the holes of the end plate 92 with holes of the first end. The permeate water 102 and the concentrate water 103 are discharged from the second end to the exterior of the separation membrane element 100C as with the separation membrane element 100A of the first embodiment.

Since the raw water is supplied to the wound body not only from one end (i.e., the end plate 92 with holes) of the separation membrane element 100C, but also from the outer periphery of the separation membrane element 100C, the deformation of the wound body can be suppressed. Also in the present embodiment, since the raw water is supplied from a space between the pressure vessel and the separation membrane element, the occurrence of abnormal retention of the raw water is suppressed.

[3. Method for Producing Separation Membrane Element]

The method for producing a separation membrane element includes a process for producing a separation membrane. The process for producing a separation membrane includes at least the following steps of:

preparing a separation membrane main body having a substrate and a separation functional layer;
softening, by heating, a material having a composition different from that of the separation membrane main body;
forming a channel material on a permeate side by arranging the softened material on the substrate-side surface of the separation membrane main body; and
affixing the channel material on the permeate side to the separation membrane main body by solidifying the material.

The respective steps in the method for producing a separation membrane element will be described below.

(3-1) Production of Separation Membrane Main Body

The method for producing the separation membrane main body is described above, and its summary is as follows.

A resin is dissolved in a good solvent, the resulting resin solution is cast on a substrate and immersed in pure water to combine a porous support layer with the substrate. Thereafter, as described above, a separation functional layer is formed on the porous support layer. Moreover, as required, the separation functional layer is subjected to a chemical treatment by chlorine, acid, alkali, nitrous acid or the like in order to improve separation performance and permeation performance, and then the separation functional layer is washed for the removal of the monomer and the like to prepare a continuous sheet of the separation membrane main body.

In addition, projections and depressions may be formed on the separation membrane main body by embossing or the like before or after the chemical treatment.

(3-2) Arrangement of Channel Material on Permeate Side

The method for producing the separation membrane includes the step of disposing a discontinuous channel material on the permeate-side surface of the separation membrane main body. This step may be conducted at any time of separation membrane production. For example, the channel material may be disposed before forming the porous support layer on the substrate, or may be disposed before forming the separation functional layer and after disposing the porous support layer, or may be disposed before or after the chemical treatment after forming the separation functional layer.

A method of arranging the channel material includes, for example, the step of arranging a soft material on the separation membrane, and the step of curing the material. Specifically, ultraviolet-curable resins, chemical polymerization, hot-melt, drying and the like are used for arranging the channel material. Particularly, hot-melt is preferably used, and specifically, this process includes the step of softening materials such as resins by heat (namely, thermally melting), the step of arranging the softened material on the separation membrane, and the step of affixing the material to the separation membrane by curing through cooling.

Examples of the method of arranging the channel material include application, printing, spraying, and the like. Examples of equipment used for arranging the channel material include hot-melt applicators of a nozzle type, hot-melt applicators of a spray type, hot-melt applicators of a flat nozzle type, roll coaters, extrusion type coaters, printing machines, sprayers and the like.

(3-3) Formation of Flow Path on Feed Side

When the channel material on the feed side is a discontinuous member formed of a material different from that of the separation membrane main body, the same method and timing as in the formation of the channel material on the permeate side can be applied to the formation of the channel material on the feed side.

Further, it is also possible to provide the height difference for the feed side of the separation membrane by using methods such as embossing, isostatic pressing, and calendering.

Examples of the embossing method include roll embossing and the like. The pressure and the temperature used in the embossing can be adequately determined depending on the melting point of the separation membrane. For example, when the separation membrane has a porous support layer containing an epoxy resin, the embossing is preferably performed at a linear pressure of 10 kg/cm or more and 60 kg/cm or less, and at a heating temperature of 40°C or more and 150°C or less . When the separation membrane has a porous support layer containing a heat resistant resin such as polysulfone, the embossing is preferably performed at a linear pressure of 10 kg/cm or more and 70 kg/cm or less, and at a roll heating temperature of 70°C or more and 160°C or less. In the case of roll embossing, the embossed separation membrane is preferably taken up at a speed of 1 m/minute or more and 20 m/minute or less in any case.

In the case of embossing, the shape of the pattern provided on the roll is not particularly limited, but it is important to reduce the pressure loss in the flow path and stabilize the flow path during supplying of the fluid to the separation membrane element and permeation of the fluid. In view of these points, in the shape of the pattern observed from above the surface of the separation membrane, oval, circle, ellipse, trapezoid, triangle, rectangle, square, parallelogram, rhombus, indeterminate forms, and the like are employed. Further, three dimensionally, the pattern may be formed such that the higher the height of a portion of the pattern is, the smaller the width of the pattern is, or may be formed such that the higher the height of a portion of the pattern is, the larger the width of the pattern is, or may be formed such that the with of the pattern is constant regardless of the height of, the pattern.

The height difference of the feed-side surface of the separation membrane, which can be provided by embossing, can be freely adjusted by changing the pressure and heating conditions in such a way that separation properties and water permeation performance satisfy the required conditions.

In addition, as described above, when the flow path on the feed side is formed by affixing the channel material on the feed side to the separation membrane main body, or by providing the separation membrane with projections and depressions, these steps of forming the flow path on the feed side may be regarded as one step in the method for producing the separation membrane.

When the flow path on the feed side is a member continuously formed such as a net, the flow path on the feed side may be formed by arranging the channel material on the permeate side on the separation membrane main body to produce a separation membrane and then overlaying the channel material on the feed side on the separation membrane.

(3-4) Formation of Separation Membrane Leaf

As described above, the separation membrane leaf may be formed by folding the separation membrane so that the feed-side surface faces inward, or may be formed by bonding the two separate separation membranes to each other such that feed-side surfaces thereof face each other.

The method for producing the separation membrane element preferably includes the step of sealing an inner end in the winding direction of the separation membrane at the feed-side surface. In the step of sealing, two separation membranes are overlaid on each other such that the feed-side surfaces thereof face each other. Further, the inner ends in the winding direction of the overlaid separation membranes, that is, left-hand ends in Fig. 5, are sealed.

Examples of a method of "sealing" include adhesion using an adhesive, hot-melt or the like; melt adhesion using heating, laser or the like; and sandwiching of a sheet made from rubber. The sealing by adhesion is particularly preferred since it is the most convenient and has a large effect.

At this time, a channel material on the feed side, which is formed separately from the separation membrane, may be disposed on the inner side of the overlaid separation membranes. By previously providing the height difference on the feed-side surface of the separation membrane by embossing or resin application as described above, arrangement of the channel material on the feed side can be omitted.

Either sealing of the feed-side surface or sealing of the permeate-side surface (formation of the envelope-like membrane) may be performed first, or sealing of the feed-side surface and sealing of the permeate-side surface may be performed in parallel while overlaying the separation membranes. However, in order to suppress the occurrence of wrinkles in the separation membrane during winding, it is preferred to complete the solidification of an adhesive or hot-melt at an end in a width direction, that is, the solidification for forming the envelope-like membrane, after the completion of winding to allow the possibility that the separation membranes adjacent to each other deviate from each other in a length direction by winding.

(3-5) Formation of Envelope-like Membrane

An envelope-like membrane can be formed by folding a separation membrane so that the permeate-side surface faces inward, and bonding the permeate-side surfaces to each other, or by overlaying two separation membranes so that the permeate-side surfaces face inward, and bonding the permeate-side surfaces to each other. In the rectangular envelope-like membrane, in order to open only one end in the length direction, other three sides are sealed. Sealing can be carried out by adhesion using an adhesive, hot-melt or the like, melt adhesion using heating or laser, or the like.

The adhesive used for the formation of the envelope-like membrane preferably has a viscosity of 40 P or more and 150 P or less, and more preferably 50 P or more and 120 P or less. When the viscosity of the adhesive is too high, wrinkles easily occur when a laminated leaf is wound around the water collection tube. The wrinkle may impair performance of the separation membrane element. On the other hand, when the viscosity of the adhesive is too low, the adhesive may flow out of the end of the leaf to contaminate the apparatus. Further, when the adhesive adheres to a portion other than a portion for adhesion, performance of the separation membrane element is impaired, and operation efficiency is significantly decreased due to operation for treating the adhesive flown out.

The amount of the adhesive to be applied is preferably such an amount that the width of an area to which the adhesive is applied is 10 mm or more and 100 mm or less after winding the leaf around the water collection tube. This allows the separation membrane to adhere with certainty, and therefore flow of the raw water into the permeate side is suppressed. A relatively large effective membrane area of the separation membrane element can be secured.

As the adhesive, an urethane-based adhesive is preferable, and an adhesive prepared by mixing isocyanate as a main component and a polyol as a curing agent so that the weight ratio of the isocyanate to the polyol is 1/5 or more and 1 or less is preferable in order to adjust the viscosity to the range of 40 P or more and 150 P or less. The viscosity of the adhesive is a value obtained by measuring the viscosity of a mixture in which the main component, the curing agent alone and a mixing ratio are previously defined by using Type B viscometer (JIS K 6833).

(3-6) Winding of Separation Membrane

A conventional element manufacturing apparatus can be employed for producing the separation membrane element. As a method of preparing the element, the methods described in reference literatures (JP 44-014216 B, JP 04-011928 B, JP 11-226366 A) can be used. The detail is as follows.

When the separation membrane is wound around the water collection tube, the separation membrane is arranged such that a closed end of the leaf, namely, a closed portion of the envelope-like membrane, faces the water collection tube. By winding the separation membrane around the water collection tube in this arrangement, the separation membrane is spirally wound.

When a spacer such as tricot or a substrate is wound around the water collection tube, the adhesive applied to the water collection tube is hardly fluidized at the time of winding the element, this leads to suppressing of leakage, and furthermore the flow path around the water collection tube is secured stably. In addition, the spacer may be wound longer than the perimeter of the water collection tube.

(3-7) Other Steps

The method for producing the separation membrane element may include winding a film, a filament and the like further around the outside of a wound body of the separation membrane formed as described above, or may include additional steps such as cutting the edges in which the edges of the separation membrane in the axial direction of the water collection tube are cut and aligned, attaching the end plates to the edges, and the like.

[4. Use of Separation Membrane Element]

The separation membrane element may be processed for use as a separation membrane module through further connecting two or more separation membrane elements in series or parallel and accommodating in a pressure vessel.

Further, the separation membrane element, separation membrane module, can be used for constituting a fluid separation apparatus by combining with, for example, a pump for supplying the fluid to the separation membrane element or separation membrane module, or an apparatus which conducts pretreatment of the fluid. By using the separation apparatus, for example, the raw water can be separated into the permeate water such as drinking water and concentrate water which does not permeate the separation membrane to obtain the desired water.

The operation pressure used in the permeation of water to be treated through the membrane module is preferably 0.2 MPa or more and 5 MPa or less considering that though a removal rate of the components is improved with the increase of the operation pressure of the fluid separation apparatus, the energy required for the operation also increases with the pressure, and considering the retention of the feed flow path and permeate flow path of the separation membrane element. The temperature of the raw water is preferably 5°C or more and 45°C or less since excessively high temperature results in the reduced desalination rate and the lower temperature causes the flux of membrane permeation to decrease.

When the pH of the raw water is in a neutral range, the production of scale of magnesium or the like is suppressed and membrane deterioration is also suppressed even when the raw water is a liquid with high salt concentration such as sea water.

The fluid treated by the separation membrane element is not particularly limited, and examples of the raw water subjected to water treatment include a liquid mixture containing 500 mg/L or more and 100 g/L or less of TDS (total dissolved solids) such as sea water, brackish water, and drainage water. TDS generally refers to the total content of the dissolved solid content and is represented by the unit of (weight/volume), but it may be represented by "weight ratio" when 1 L is regarded as 1 kg. TDS is calculated, by definition, from the weight of the residue when the solution filtered through a 0.45 $\mu$m filter is evaporated at a temperature of 39.5°C to 40.5°C. However, for more convenience, TDS is calculated by conversion from practical salinity (S).

EXAMPLES

Hereinafter, the present invention will be described in more detail by referring to Examples, but the present invention is by no means limited by these Examples.

(Height Difference on Permeate Side of Separation Membrane)

An average height difference was analyzed from measurements of the permeate side of the separation membrane cut to the size of 5 cm × 5 cm using high precision profilometer system KS-1100 manufactured by KEYENCE Corporation. The average was calculated by measuring 30 points with at least 10 $\mu$m height difference, summing the height measured, and dividing the sum by the number of points measured.

(Pitch and Interval of Channel Material on Permeate Side)

Thirty arbitrary cross-sections of the channel material were photographed at a magnification of 500 times by using a scanning electron microscope (Model S-800) (manufactured by HITACHI, LTD.), and a horizontal distance between an apex of the channel material on the permeate side of the separation membrane and an apex of a neighboring channel material was measured at 200 locations, and an average value calculated from the measurements was taken as a pitch.

The interval b was measured by the method described above in the photos used for measuring the pitch.

(Projected Area Ratio of Channel Material)

The separation membrane was cut out to the size of 5 cm × 5 cm together with the channel material, and the entire projected area of the channel material was measured by using a laser microscope (the magnification was selected from 10 times to 500 times) and moving a stage of the microscope. A value obtained by dividing a projected area obtained when the channel material was projected from the permeate side or feed side of the separation membrane by the cut out area was taken as a projected area ratio.

(Amount of Water Produced)

The separation membrane or the separation membrane element was operated for 100 hours under the operation conditions (recovery rate 15%) of an operation pressure of 5.5 MPa, an operation temperature of 25°C and a pH of 6.5 using 3.5% by weight of salt as raw water. Thereafter, the separation membrane or the separation membrane element was operated for 10 minutes under the same conditions, and thereby permeate water was obtained. The amount of permeate water (cubic meter) per unit area of the separation membrane and per day was determined from the volume of the permeate water obtained in the 10-minutes operation, and taken as the amount of water produced ($m^3$/day).

(Desalination Rate (Removal Rate of TDS))

On the raw water which was used in the 10-minutes operation in measurement of the amount of water produced and the permeate water sampled, a TDS concentration was determined from measurement of conductance, and the removal rate of TDS was calculated by the following formula:

```
Removal rate of TDS (%) = 100 × {1 - (TDS concentration of the
permeate water/TDS concentration of the raw water)}.
```

(Defect Rate)

For all the wall-like bodies (channel material on the permeate side), the membrane leaf length L1 and the distance L3 of a region where the wall-like body did not exist or the channel material was applied over the surface from an end away from the water collection tube were measured, and the calculation based on the formula, defect rate (%) = L3/L1 × 100, was conducted to determine an average value per wall-like body. Hereinafter, the determined average is called as "defect rate".

(Compressive Elasticity Modulus)

The channel material was melt formed into a columnar shape having a diameter of 10 mm and a thickness of 25 mm, and a relation between compression stress and strain was measured at a compression velocity of 10 mm/min and at 25°C by using Tensilon Universal Material Testing Instrument (RTF-2430, manufactured by A&D Company, Limited), and an initial slope of the resulting curve was determined. The initial slope is a compressive elasticity modulus.

(Boron Removal Rate)

Boron concentrations of the raw water and the permeate water were analyzed with an ICP emission spectrometer (P-4010 manufactured by HITACHI, LTD.) and the boron removal rate was determined from the following formula.

$$\text{Boron removal rate (\%)} = 100 \times \{1 - (\text{boron concentration of the permeate water/boron concentration of the raw water})\}$$

(Bending resistance)

According to ISO 13934-1: 1999, the bending resistance was measured by using a horizontal table having a horizontal plane and an inclined plane of 45°. Specifically, the separation membrane was cut into a width of 25 mm to obtain a sample. The sample of the separation membrane was placed on the horizontal plane so that the separation functional layer was opposed to the horizontal plane. One end of the sample was aligned with a demarcation between the inclined plane and the horizontal plane, and in this state, the other end of the sample was pressed down with a metal plate. Then, the metal plate was gently slid toward the demarcation between the inclined plane and the horizontal plane while pressing the sample down. A length (mm) of the extruded sample at the time when a central part of a tip of the sample was brought into contact with the inclined plane was measured. The measured length is the bending resistance of the separation membrane.

(Example 1)

On a nonwoven fabric (fiber diameter: 1 decitex, thickness: about 90 $\mu$m, air permeability: 1 cc/cm$^2$/sec, density: 0.80 g/cm$^3$) made of polyethylene terephthalate fiber, a 15.0% by weight DMF solution of polysulfone was cast at a thickness of 180 $\mu$m at room temperature (25°C). Immediately after the casting, the fabric was immersed in pure water and left for 5 minutes, and was immersed in hot water of 80°C for 1 minute to prepare a porous support layer (thickness 130 $\mu$m) made of a fiber-reinforced polysulfone support membrane.

Thereafter, the surface of a layer made of polysulfone of the porous support membrane was immersed in a 3.8% by weight aqueous solution of m-PDA for 2 minutes, and then slowly pulled up vertically. Moreover, by blowing nitrogen on the surface from an air nozzle, an excessive aqueous solution was removed from the support membrane surface.

Thereafter, a n-decane solution containing 0.175% by weight of trimesic acid chloride was applied to fully wet the membrane surface and left for 1 minute. Thereafter, an excessive solution was removed from the membrane by blowing air, and the membrane was washed with hot water at 80°C.

Then, a channel material on the permeate side was formed throughout the separation membrane. That is, polypropylene (trade name: F219DA, compressive elasticity modulus: 1.3 GPa) was applied onto the permeate-side surface of the separation membrane by use of a gravure roll while maintaining a temperature of a backup roll at 15°C. The resin temperature was 220°C, and the processing speed was 3.0 m/min. The pattern carved on the surface of the gravure roll was semispherical dots of 0.5 mm in diameter, which were staggered, and the dot pitch was 1.0 mm.

The resulting channel material on the permeate side had a configuration in which the height is 0.26 mm, the width of the channel material was 0.5 mm, the interval and the pitch between channel materials adjacent to each other in the first and the second directions were respectively 0.4 mm and 0.9 mm, and the projected area ratio of the channel material on the permeate side to the separation membrane main body was 0.32.

Herein, the pitch refers to an average of horizontal distances between an apex of a projection in the separation membrane and an apex of a neighboring projection, which were measured at 200 locations in the permeate-side surface.

In the present example, the height difference between channel materials adjacent to each other was 30 μm or less, and the bending resistance of separation membrane was 100 mm.

The separation membrane was cut into a piece with a size of 43 cm$^2$, and the cut separation membrane was placed in a pressure vessel, and the operation (recovery rate 15%) was conducted under the conditions of an operation pressure of 5.5 MPa, an operation temperature of 25°C and a pH of 6.5 using raw water of 3.5% salt, and consequently the amount of the water produced and the desalination rate were respectively 0.72 m$^3$/m$^2$/day and 99.61%, and the boron removal rate was 90.6%. The conditions and evaluation results are shown together in Table 1.

The conditions and evaluation results of Examples and Comparative Examples are shown in Table 1 to Table 7.

(Example 2)

The separation membrane obtained in Example 1 was folded and cut so that an effective area in the separation membrane element was 37.0 m$^2$, and a net (thickness: 0.7 mm, pitch: 5 mm × 5mm, fiber diameter: 350 μm, projected area ratio: 0.13) was used for the channel material on the feed side to prepare 26 leaves with a width of 900 mm and a leaf length of 800 mm.

The leaf thus obtained was spirally wound around a water collection tube (width: 1,020 mm, diameter: 30 mm, number of holes of 40 × one row in a linear arrangement) made of ABS, and a film was further wound on the outer periphery thereof. The film was secured by a tape, and then after cutting the edges, the end plates were fitted on the edges and filament winding was conducted to prepare an 8-inch element. Note that both end plates were end plates with holes. That is, in the present example was prepared a separation membrane element which is the first embodiment shown in Fig. 8.

The separation membrane element was placed in a pressure vessel, and the operation (recovery rate 15%) was conducted under the conditions of an operation pressure of 5.5 MPa, an operation temperature of 25°C and a pH of 6.5 using raw water of 3.5% salt, and consequently the amount of the water produced and the desalination rate were respectively 24.0 m$^3$/day and 99.61%, and the boron removal rate was 90.6%. In addition, the amount of deformation of the height of the channel material before and after pressurized filtration was 40% or less.

(Example 3)

Hereinafter, a separation membrane was prepared under the same conditions as in Example 1 except for the conditions particularly referred to.

A channel material on the permeate side was formed by linearly applying a resin onto the permeate-side surface of the separation membrane main body at a resin temperature of 220°C and at a processing speed of 3.0 m/min by use of an applicator equipped with a comb-shaped shim having a slit width of 0.5 mm and a pitch of 0.9 mm while maintaining a temperature of a backup roll at 20°C. The used resin was polypropylene (trade name: F219DA, compressive elasticity modulus: 1.3 GPa). In addition, the direction in which the channel material on the permeate side was applied (i.e., a longitudinal direction of the channel material on the permeate side) was parallel to the longitudinal direction of the separation membrane main body (i.e., the longitudinal direction of the nonwoven fabric being a substrate).

The formed channel material on the permeate side had a height of 0.26 mm, a width of 0.5 mm, an angle between the channel material and the axial direction of the water collection tube of 90°, and an interval of 0.4 mm and a pitch of 0.9 mm between the channel materials in the first direction. Furthers, the height difference between the channel materials adjacent to each other was 30 μm or less, and the projected area ratio of the channel material on the permeate side to the separation membrane main body was 0.55. The defect rate of the channel material on the permeate side was 0%. The bending resistance of the separation membrane was 190 mm.

The separation membrane was cut into a piece with a size of 43 cm$^2$, and the cut separation membrane was placed in a pressure vessel, and the operation was conducted under the conditions described above to obtain permeate water, and consequently the amount of the water produced and the desalination rate were respectively 0.72 m$^3$/m$^2$/day and 99.63%, and the boron removal rate was 90.7%.

(Example 4)

The separation membrane obtained in Example 3 was arranged such that the longitudinal direction of the separation membrane is perpendicular to the axial direction of the water collection tube, and an 8-inch element was prepared in the same manner as in Example 2.

The resulting element was placed in a pressure vessel, and the operation was conducted under the conditions described above to obtain permeate water, and consequently the amount of the water produced and the desalination rate were respectively 23.3 m$^3$/day and 99.61%, and the boron removal rate was 90.6%. In addition, the amount of deformation of the height of the channel material before and after pressurized filtration was 40% or less.

(Example 5)

A separation membrane was prepared in the same manner as in Example 3 except that the defect rate was 12%. Subsequently, a separation membrane element was prepared in the same manner as in Example 2.
The separation membrane element was placed in a pressure vessel, and the operation was conducted under the conditions described above to obtain permeate water, and consequently the amount of the water produced and the desalination rate were respectively 21.1 m$^3$/day and 99.61%, and the boron removal rate was 90.6%. In addition, the amount of deformation of the height of the channel material before and after pressurized filtration was 40% or less.

(Example 6)

A separation membrane was prepared in the same manner as in Example 3 except that the defect rate was 25%. Subsequently, a separation membrane element was prepared in the same manner as in Example 2.
The separation membrane element was placed in a pressure vessel, and the operation was conducted under the conditions described above to obtain permeate water, and consequently the amount of the water produced and the desalination rate were respectively 19.5 m$^3$/day and 99.62%, and the boron removal rate was 90.4%. In addition, the amount of deformation of the height of the channel material before and after pressurized filtration was 40% or less.

(Example 7)

A separation membrane was prepared in the same manner as in Example 3 except that the height of the channel material on the permeate side was changed to 0.32 mm. Subsequently, a separation membrane element was prepared in the same manner as in Example 2 except that the effective membrane area of the separation membrane element was changed to 36 m$^2$.
The separation membrane element was placed in a pressure vessel, and the operation was conducted under the conditions described above to obtain permeate water, and consequently the amount of the water produced and the desalination rate were respectively 23.3 m$^3$/day and 99.61%, and the boron removal rate was 90.6%. In addition, the amount of deformation of the height of the channel material before and after pressurized filtration was 40% or less.

(Example 8)

A separation membrane element was prepared in the same manner as in Example 2 except that the separation membrane obtained in Example 3 was used, the thickness of the net as the channel material on the feed side was 0.95 mm, and the effective membrane area of the separation membrane element was change to 31 m$^2$.
The separation membrane element was placed in a pressure vessel, and the operation was conducted under the conditions described above to obtain permeate water, and consequently the amount of the water produced and the desalination rate were respectively 19.0 m$^3$/day and 99.63%, and the boron removal rate was 90.5%. In addition, the amount of deformation of the height of the channel material before and after pressurized filtration was 40% or less.

(Example 9)

The separation membrane obtained in Example 3 was folded and cut so that an effective area in the separation membrane element was 0.5 m$^2$, and a net (thickness: 510 μm, pitch: 2 mm × 2 mm, fiber diameter: 255 μm, projected area ratio: 0.21) was used for the channel material on the feed side to prepare 2 leaves with a width of 200 mm.
Thereafter, two leaves were spirally wound around a water collection tube (width: 300 mm, outer diameter: 17 μm, number of holes of 8 × two rows in a linear arrangement) made of ABS to prepare a separation membrane element, and a film was wound on the outer periphery thereof, and the film was secured by a tape, and then after cutting the edges, the end plates were fitted on the edges to prepare a 2-inch element.
The separation membrane element was placed in a pressure vessel, and the operation was conducted under the conditions described above to obtain permeate water, and consequently the amount of the water produced and the desalination rate were respectively 0.156 m$^3$/day and 99. 69%, and the boron removal rate was 90.9%. In addition, the amount of deformation of the height of the channel material before and after pressurized filtration was 40% or less.

(Example 10)

A separation membrane element was prepared in the same manner as in Example 9 except that the height of the channel material on the permeate side was changed to 0.11 mm, and the effective membrane area of the separation membrane element was changed to 0.56 m$^2$.

The separation membrane element was placed in a pressure vessel, and the operation was conducted under the conditions described above to obtain permeate water, and consequently the amount of the water produced and the desalination rate were respectively 0.170 m$^3$/day and 99.69%, and the boron removal rate was 90.9%. In addition, the amount of deformation of the height of the channel material before and after pressurized filtration was 40% or less.

(Example 11)

A separation membrane element was prepared in the same manner as in Example 9 except that the number of the leaves was 1 (leaf length 1,600 mm), and the effective membrane area of the separation membrane element was changed to 0.49 m$^2$.

The separation membrane element was placed in a pressure vessel, and the operation was conducted under the conditions described above to obtain permeate water, and consequently the amount of the water produced and the desalination rate were respectively 0.167 m$^3$/day and 99.69%, and the boron removal rate was 90.9%. In addition, the amount of deformation of the height of the channel material before and after pressurized filtration was 40% or less.

(Example 12)

The separation membrane obtained in Example 3 was folded and cut so that an effective area in the separation membrane element was 0.5 m$^2$, and a net (thickness: 510 $\mu$m, pitch: 2 mm $\times$ 2 mm, fiber diameter: 255 $\mu$m, projected area ratio: 0.21) was used for the channel material on the feed side to prepare 6 leaves with a width of 200 mm.

Thereafter, two leaves were spirally wound around a water collection tube (width: 300 mm, outer diameter: 17 mm, number of holes of 8 $\times$ two rows in a linear arrangement) made of ABS to prepare a separation membrane element, and a film was wound on the outer periphery thereof, and the film was secured by a tape, and then after cutting the edges, the end plates were fitted on the edges to prepare a 3-inch element.

The separation membrane element was placed in a pressure vessel, and the operation was conducted under the conditions described above to obtain permeate water, and consequently the amount of the water produced and the desalination rate were respectively 0.500 m$^3$/day and 99. 69%, and the boron removal rate was 90.9%. In addition, the amount of deformation of the height of the channel material before and after pressurized filtration was 40% or less.

(Example 13)

A separation membrane was prepared in the same manner as in Example 3 except that the cross-section shape of the channel material on the permeate side was a semicircle (width: 0.5 mm). A separation membrane element was prepared in the same manner as in Example 2 by using the separation membrane.

The separation membrane element was placed in a pressure vessel, and the operation was conducted under the conditions described above to obtain permeate water, and consequently the amount of the water produced and the desalination rate were respectively 23.0 m$^3$/day and 99.61%, and the boron removal rate was 90.6%. In addition, the amount of deformation of the height of the channel material before and after pressurized filtration was 40% or less.

(Example 14)

A separation membrane was prepared in the same manner as in Example 3 except that a polyester long fiber nonwoven fabric (fiber diameter: 1 decitex, thickness: about 90 $\mu$m, air permeability: 1.0 cc/cm$^2$/sec, fiber orientation degree of a surface layer on the porous support layer side: 40°, fiber orientation degree of a surface layer on the side opposite to the porous support layer side: 20°, density: 0.80 g/cm$^3$) was used as a substrate. A separation membrane element was prepared in the same manner as in Example 2 by using the separation membrane.

The separation membrane element was placed in a pressure vessel, and the operation was conducted under the conditions described above to obtain permeate water, and consequently the amount of the water produced and the desalination rate were respectively 23.4 m$^3$/day and 99.70%, and the boron removal rate was 90.8%. In addition, the amount of deformation of the height of the channel material before and after pressurized filtration was 40% or less.

(Example 15)

A separation membrane was prepared in the same manner as in Example 3 except that a polyester long fiber nonwoven fabric (fiber diameter: 1 decitex, thickness: about 90 $\mu$m, air permeability: 1.0 cc/cm$^2$/sec, fiber orientation degree of a surface layer on the porous support layer side: 40°, fiber orientation degree of a surface layer on the side opposite to the porous support layer side: 20°, density: 0.80 g/cm$^3$) was used as a substrate, and calcium carbonate (produced by Wako Pure Chemical Industries, Ltd.) was added in an amount of 25 wt% to polypropylene. Moreover, a separation membrane element was prepared in the same manner as in Example 2. The bending resistance of the separation membrane was 210 mm. The compressive elasticity modulus of the channel material on the permeate side was 1.5 GPa.

The separation membrane element was placed in a pressure vessel, and the operation was conducted under the conditions described above to obtain permeate water, and consequently the amount of the water produced and the desalination rate were respectively 23.5 m$^3$/day and 99.61%, and the boron removal rate was 90.6%. In addition, the amount of deformation of the height of the channel material before and after pressurized filtration was 40% or less.

(Example 16)

A separation membrane was prepared in the same manner as in Example 3 except that with respect to the conditions of forming the channel material on the permeate side, the resin was a modified olefin-based hot-melt (PK-100S, compressive elasticity modulus: 0.11 GPa), the resin temperature was 170°C, and the processing speed was 6.0 m/min. A separation membrane element was prepared in the same manner as in Example 2 by using the separation membrane. The bending resistance of the separation membrane was 110 mm.

The separation membrane element was placed in a pressure vessel, and the operation was conducted under the conditions described above to obtain permeate water, and consequently the amount of the water produced and the desalination rate were respectively 21.7 m$^3$/day and 99.62%, and the boron removal rate was 90.8%. In addition, the amount of deformation of the height of the channel material before and after pressurized filtration was 40% or less.

(Example 17)

A separation membrane was prepared in the same manner as in Example 3 except that with respect to the conditions of forming the channel material on the permeate side, the resin was a polyolefin-based hot-melt (trade name: PHC-9275, compressive elasticity modulus: 0.18 GPa), the resin temperature was 180°C, and the processing speed was 11.0 m/min. A separation membrane element was prepared in the same manner as in Example 2 by using the separation membrane. The bending resistance of the separation membrane was 140 mm.

The separation membrane element was placed in a pressure vessel, and the operation was conducted under the conditions described above to obtain permeate water, and consequently the amount of the water produced and the desalination rate were respectively 21.8 m$^3$/day and 99.61%, and the boron removal rate was 90.6%. In addition, the amount of deformation of the height of the channel material before and after pressurized filtration was 40% or less.

(Example 18)

A separation membrane was prepared in the same manner as in Example 17 except that with respect to the conditions of forming the channel material on the permeate side, magnesium silicate (produced by Wako Pure Chemical Industries, Ltd.) was added to a polyolefin-based hot-melt in an amount of 25 wt%. Further, a separation membrane element was prepared. The bending resistance of the separation membrane was 150 mm. The compressive elasticity modulus of the channel material on the permeate side was 0.25 GPa.

The separation membrane element was placed in a pressure vessel, and the operation was conducted under the conditions described above to obtain permeate water, and consequently the amount of the water produced and the desalination rate were respectively 22.0 m$^3$/day and 99.61%, and the boron removal rate was 90.6%. In addition, the amount of deformation of the height of the channel material before and after pressurized filtration was 40% or less.

(Example 19)

A separation membrane was prepared in the same manner as in Example 3 except that with respect to the conditions of forming the channel material on the permeate side, the resin was polyethylene terephthalate (trade name: PET 200, compressive elasticity modulus: 2.9 GPa), the resin temperature was 280°C, and the processing speed was 2.0 m/min. A separation membrane element was prepared in the same manner as in Example 2 by using the separation membrane. The bending resistance of the separation membrane was 250 mm.

The separation membrane element was placed in a pressure vessel, and the operation was conducted under the conditions described above to obtain permeate water, and consequently the amount of the water produced and the desalination rate were respectively 23.8 $m^3$/day and 99.60%, and the boron removal rate was 90.3%. In addition, the amount of deformation of the height of the channel material before and after pressurized filtration was 40% or less.

(Example 20)

A separation membrane was prepared in the same manner as in Example 3 except that with respect to the conditions of forming the channel material on the permeate side, the resin was polystyrene (trade name: CR-2500, compressive elasticity modulus: 3.5 GPa), the resin temperature was 250°C, and the processing speed was 2.0 m/min. A separation membrane element was prepared in the same manner as in Example 2 by using the separation membrane. The bending resistance of the separation membrane was 290 mm.

The separation membrane element was placed in a pressure vessel, and the operation was conducted under the conditions described above to obtain permeate water, and consequently the amount of the water produced and the desalination rate were respectively 23.9 $m^3$/day and 99.59%, and the boron removal rate was 90.0%. In addition, the amount of deformation of the height of the channel material before and after pressurized filtration was 40% or less.

(Example 21)

A separation membrane was prepared in the same manner as in Example 20 except that with respect to the conditions of forming the channel material on the permeate side, calcium carbonate (produced by Wako Pure Chemical Industries, Ltd.) was added to polystyrene in an amount of 25 wt%, and the compressive elasticity modulus was set to 4.0 GPa. A separation membrane element was prepared in the same manner as in Example 2 by using the separation membrane. The bending resistance of the separation membrane was 320 mm.

The separation membrane element was placed in a pressure vessel, and the operation was conducted under the conditions described above to obtain permeate water and consequently the amount of the water produced and the desalination rate were respectively 24.0 $m^3$/day and 99.58%, and the boron removal rate was 90.0%. In addition, the amount of deformation of the height of the channel material before and after pressurized filtration was 40% or less.

(Example 22)

A separation membrane was prepared in the same manner as in Example 20 except that with respect to the conditions of forming the channel material on the permeate side, magnesium silicate (produced by Wako Pure Chemical Industries, Ltd.) was added to polystyrene in an amount of 50 wt%. A separation membrane element was prepared in the same manner as in Example 2 by using the separation membrane. The compressive elasticity modulus of the channel material on the permeate side was 4.2 GPa, and the bending resistance of the separation membrane was 390 mm.

The separation membrane element was placed in a pressure vessel, and the operation was conducted under the conditions described above to obtain permeate water, and consequently the amount of the water produced and the desalination rate were respectively 24.0 $m^3$/day and 99.50%, and the stability was 89.7%. In addition, the amount of deformation of the height of the channel material before and after pressurized filtration was 40% or less.

(Example 23)

A wound body was prepared by spirally winding the separation membrane prepared in Example 3 around a water collection tube as with Example 2. The outer periphery of the wound body was covered with a net (thickness: 0.7 mm, pitch: 5 mm × 5 mm, fiber diameter: 350 $\mu$m, projected area ratio: 0.13) continuously extruded into a tube shape. After both ends of the wound body covered with the net was subjected to edge cutting, an end plate without holes (corresponding to the first end plate 91) was attached to one end of the wound body, and an end plate with holes (corresponding to the second end plate 92) was attached to the other end of the wound body. The separation membrane element of the present example had a supply port of the raw water only at the outer periphery of the separation membrane element, and corresponded to the separation membrane element 100B of the second embodiment shown in Fig. 9.

The separation membrane element was placed in a pressure vessel, and the operation was conducted under the conditions described above to obtain permeate water, and consequently the amount of the water produced and the desalination rate were respectively 22.4 $m^3$/day and 99.61%, and the boron removal rate was 90.0%. In addition, the amount of deformation of the height of the channel material before and after pressurized filtration was 40% or less.

(Example 24)

End plates with holes (corresponding to the second end plate 92) were attached to both ends of the wound body. The separation membrane element of the present example had a supply port at both of the outer periphery of the separation membrane element and the end of the separation membrane element, and corresponded to the separation membrane element 100C of the third embodiment shown in Fig. 10.

The separation membrane element was placed in a pressure vessel, and the operation was conducted under the conditions described above to obtain permeate water, and consequently the amount of the water produced and the desalination rate were respectively 23.1 m$^3$/day and 99.61%, and the boron removal rate was 90.1%. In addition, the amount of deformation of the height of the channel material before and after pressurized filtration was 40% or less.

(Comparative Example 1)

A separation membrane element was prepared in the same manner as in Example 2 except that tricot (thickness: 280 μm, width of groove: 400 μm, width of ridge: 300 μm, depth of groove: 105 μm, made of polyethylene terephthalate), having a continuous shape, was used as the channel material on the permeate side to be arranged on the permeate side.

The separation membrane element was placed in a pressure vessel, and the operation was conducted under the conditions described above to obtain permeate water, and consequently the amount of the water produced and the desalination rate were respectively 21.1 m$^3$/day and 99.67%, and the boron removal rate was 90.4%.

(Comparative Example 2)

A separation membrane was prepared in the same manner as in Example 3 except that with respect to the conditions of forming the channel material on the permeate side, the resin was an ethylene-vinyl acetate-based hot-melt (701A, compressive elasticity modulus: 0.04 GPa), the resin temperature was 115°C, and the processing speed was 5.0 m/min. A separation membrane element was prepared in the same manner as in Example 2 by using the separation membrane. The bending resistance of the separation membrane was 170 mm.

The separation membrane element was placed in a pressure vessel, and the operation was conducted under the conditions described above to obtain permeate water, and consequently the amount of the water produced and the desalination rate were respectively 9.7 m$^3$/day and 93.67%, and the boron removal rate was 90.3%.

(Comparative Example 3)

A separation membrane was prepared in the same manner as in Example 3 except that with respect to the conditions of forming the channel material on the permeate side, the resin was an olefin-based hot-melt (2705, compressive elasticity modulus: 0.08 GPa), the resin temperature was 145°C, and the processing speed was 7.0 m/min. A separation membrane element was prepared in the same manner as in Example 2 by using the separation membrane. The bending resistance of the separation membrane was 170 mm.

The separation membrane element was placed in a pressure vessel, and the operation was conducted under the conditions described above to obtain permeate water, and consequently the amount of the water produced and the desalination rate were respectively 10.1 m$^3$/day and 99.61%, and the stability was 90.3%.

As is apparent from the results, the separation membranes and the separation membrane elements of the examples have high water production performance, stable operation performance, and excellent removal performance.

[Table 1]

[Table 1]

| | | Example 1 | Example 2 | Example 3 | Example 4 |
|---|---|---|---|---|---|
| Element | Embodiment | first | first | first | first |
| | EL Size / Number of Leaves | 8 inch / 26 | 8 inch / 26 | 8 inch / 26 | 8 inch / 26 |
| Separation Membrane | Effective Membrane Area (m²) | 37 | 37 | 37 | 37 |
| | Leaf Length a (mm) | 800 | 800 | 800 | 800 |
| | Arrangement | staggered dot-like | staggered dot-like | linear | linear |
| | Material | polypropylene | polypropylene | polypropylene | polypropylene |
| | Filler | - | - | - | - |
| | Compressive Elasticity Modulus (GPa) | 1.3 | 1.3 | 1.3 | 1.3 |
| | Bending Resistance (mm) | 100 | 100 | 190 | 190 |
| | Angle between Channel Material and Axial Direction of Water Collection Tube (°) | 90 | 90 | 90 | 90 |
| Permeate-side Channel Material | Cross-section Shape | semicircle | semicircle | trapezoid | trapezoid |
| | Height c (mm) | 0.26 | 0.26 | 0.26 | 0.26 |
| | Upper Base (mm) | - | - | 0.45 | 0.45 |
| | Lower Base (mm) | 0.5 (diameter) | 0.5 (diameter) | 0.55 | 0.55 |
| | Interval b between Channel Materials in First Direction (Width Direction) (mm) | 0.40 | 0.40 | 0.40 | 0.40 |
| | Width d of Permeate-side Channel Material (mm) | 0.50 | 0.50 | 0.50 | 0.50 |
| | Interval e between Channel Materials in Second Direction (Length Direction) (mm) | 0.40 | 0.40 | 0 | 0 |
| | Length f of Channel Material (mm) | - | - | - | - |
| | Pitch (mm) | 0.9 | 0.9 | 0.9 | 0.9 |
| | Projected Area Ratio {df/(b + d)(e + f)} | 0.32 | 0.32 | 0.55 | 0.55 |
| | Defect Rate (%) | 0 | 0 | 0 | 0 |
| | Discontinuity of Channel Material per One Leaf | 0.4 mm x 1000 locations | 0.4 mm x 1000 locations | - | - |
| Feed-side Channel Material | Shape | - | net | - | net |
| | Material | - | polypropylene | - | polypropylene |
| | Thickness (mm) | - | 0.70 | - | 0.70 |
| | Fiber Diameter (mm) | - | 0.35 | - | 0.35 |
| | Pitch (mm) | - | 5 | - | 5 |
| | Projected Area Ratio | - | 0.13 | - | 0.13 |
| Separation Membrane Performance | Amount of Water Produced (m³/m²/day) | 0.72 | - | 0.72 | - |
| | Desalination Rate (%) | 99.61 | - | 99.63 | - |
| | Boron Removal Rate (%) | 90.6 | - | 90.7 | - |
| Element Performance | Amount of Water Produced (m³/day) | - | 24.0 | - | 23.3 |
| | Desalination Rate (%) | - | 99.61 | - | 99.61 |
| | Boron Removal Rate (%) | - | 90.6 | - | 90.6 |

[Table 2]

[Table 2]

| | | Example 5 | Example 6 | Example 7 | Example 8 |
|---|---|---|---|---|---|
| Element | Embodiment | first | first | first | first |
| | EL Size / Number of Leaves | 8 inch / 26 | 8 inch / 26 | 8 inch / 26 | 8 inch / 26 |
| | Effective Membrane Area $(m^2)$ | 37 | 37 | 36 | 31 |
| Separation Membrane | Leaf Length a (mm) | 800 | 800 | 800 | 800 |
| Permeate-side Channel Material | Arrangement | linear | linear | linear | linear |
| | Material | polypropylene | polypropylene | polypropylene | polypropylene |
| | Filler | - | - | - | - |
| | Compressive Elasticity Modulus (GPa) | 1.3 | 1.3 | 1.3 | 1.3 |
| | Bending Resistance (mm) | 190 | 190 | 190 | 190 |
| | Angle between Channel Material and Axial Direction of Water Collection Tube (°) | 90 | 90 | 90 | 90 |
| | Cross-section Shape | trapezoid | trapezoid | trapezoid | trapezoid |
| | Height c (mm) | 0.26 | 0.26 | 0.32 | 0.26 |
| | Upper Base (mm) | 0.45 | 0.45 | 0.45 | 0.45 |
| | Lower Base (mm) | 0.55 | 0.55 | 0.55 | 0.55 |
| | Interval b between Channel Materials in First Direction (Width Direction) (mm) | 0.40 | 0.40 | 0.40 | 0.40 |
| | Width d of Permeate-side Channel Material (mm) | 0.50 | 0.50 | 0.50 | 0.50 |
| | Interval e between Channel Materials in Second Direction (Length Direction) (mm) | 0 | 0 | 0 | 0 |
| | Length f of Channel Material (mm) | 800 | 800 | 800 | 800 |
| | Pitch (mm) | 0.9 | 0.9 | 0.9 | 0.9 |
| | Projected Area Ratio $(df/(b + d)(e + f))$ | 0.55 | 0.55 | 0.55 | 0.55 |
| | Defect Rate (%) | 12 | 25 | 0 | 0 |
| | Discontinuity of Channel Material per One Leaf | - | - | - | - |
| Feed-side Channel Material | Shape | net | net | net | net |
| | Material | polypropylene | polypropylene | polypropylene | polyethylene |
| | Thickness (mm) | 0.70 | 0.70 | 0.70 | 0.95 |
| | Fiber Diameter (mm) | 0.35 | 0.35 | 0.35 | 0.35 |
| | Pitch (mm) | 5 | 5 | 5 | 5 |
| | Projected Area Ratio | 0.13 | 0.13 | 0.13 | 0.13 |
| Element Performance | Amount of Water Produced $(m^3/day)$ | 21.1 | 19.5 | 23.3 | 19.0 |
| | Desalination Rate (%) | 99.61 | 99.62 | 99.61 | 99.63 |
| | Boron Removal Rate (%) | 90.6 | 90.4 | 90.6 | 90.5 |

31

[Table 3]

[Table 3]

| | | Example 9 | Example 10 | Example 11 | Example 12 |
|---|---|---|---|---|---|
| Element | Embodiment | first | first | first | first |
| | EL Size / Number of Leaves | 2 inch / 2 | 2 inch / 2 | 2 inch / 2 | 3 inch / 6 |
| | Effective Membrane Area ($m^2$) | 0.48 | 0.56 | 0.49 | 1.4 |
| Separation Membrane | Leaf Length a (mm) | 800 | 800 | 1600 | 800 |
| Permeate-side Channel Material | Arrangement | linear | linear | linear | linear |
| | Material | polypropylene | polypropylene | polypropylene | polypropylene |
| | Filler | - | - | - | - |
| | Compressive Elasticity Modulus (GPa) | 1.3 | 1.3 | 1.3 | 1.3 |
| | Bending Resistance (mm) | 190 | 190 | 190 | 190 |
| | Angle between Channel Material and Axial Direction of Water Collection Tube (°) | 90 | 90 | 90 | 90 |
| | Cross-section Shape | trapezoid | trapezoid | trapezoid | trapezoid |
| | Height c (mm) | 0.26 | 0.11 | 0.26 | 0.26 |
| | Upper Base (mm) | 0.45 | 0.45 | 0.45 | 0.45 |
| | Lower Base (mm) | 0.55 | 0.55 | 0.55 | 0.55 |
| | Interval b between Channel Materials in First Direction (Width Direction) (mm) | 0.40 | 0.40 | 0.40 | 0.50 |
| | Width d of Permeate-side Channel Material (mm) | 0.50 | 0.50 | 0.50 | 0.50 |
| | Interval e between Channel Materials in Second Direction (Length Direction) (mm) | 0 | 0 | 0 | 0 |
| | Length f of Channel Material (mm) | 800 | 800 | 1600 | 800 |
| | Pitch (mm) | 0.9 | 0.9 | 0.9 | 0.9 |
| | Projected Area Ratio (df/(b + d)(e + f)) | 0.55 | 0.55 | 0.55 | 0.55 |
| | Defect Rate (%) | 0 | 0 | 0 | 0 |
| | Discontinuity of Channel Material per One Leaf | - | - | - | - |
| Feed-side Channel Material | Shape | net | net | net | net |
| | Material | polyethylene | polyethylene | polyethylene | polyethylene |
| | Thickness (mm) | 0.51 | 0.51 | 0.51 | 0.51 |
| | Fiber Diameter (mm) | 0.25 | 0.25 | 0.25 | 0.25 |
| | Pitch (mm) | 2 | 2 | 2 | 2 |
| | Projected Area Ratio | 0.21 | 0.21 | 0.21 | 0.21 |
| Element Performance | Amount of Water Produced ($m^3$/day) | 0.156 | 0.170 | 0.167 | 0.500 |
| | Desalination Rate (%) | 99.69 | 99.69 | 99.69 | 99.69 |
| | Boron Removal Rate (%) | 90.9 | 90.9 | 90.9 | 90.9 |

[Table 4]

[Table 4]

| | | Example 13 | Example 14 |
|---|---|---|---|
| Element | Embodiment | first | first |
| | EL Size / Number of Leaves | 8 inch / 26 | 8 inch / 26 |
| | Effective Membrane Area ($m^2$) | 37 | 37 |
| Separation Membrane | Leaf Length a (mm) | 800 | 800 |
| Permeate-side Channel Material | Arrangement | linear | linear |
| | Material | polypropylene | polypropylene |
| | Filler | – | – |
| | Compressive Elasticity Modulus (GPa) | 1.3 | 1.3 |
| | Bending Resistance (mm) | 190 | 190 |
| | Angle between Channel Material and Axial Direction of Water Collection Tube (°) | 90 | 90 |
| | Cross-section Shape | semicircle | trapezoid |
| | Height c (mm) | 0.26 | 0.26 |
| | Upper Base (mm) | – | 0.45 |
| | Lower Base (mm) | 0.5 (diameter) | 0.55 |
| | Interval b between Channel Materials in First Direction (Width Direction) (mm) | 0.40 | 0.40 |
| | Width d of Permeate-side Channel Material (mm) | 0.50 | 0.50 |
| | Interval e between Channel Materials in Second Direction (Length Direction) (mm) | 0 | 0 |
| | Length f of Channel Material (mm) | 800 | 800 |
| | Pitch (mm) | 1.0 | 1.0 |
| | Projected Area Ratio (df/(b + d)(e + f)) | 0.55 | 0.55 |
| | Defect Rate (%) | 0 | 0 |
| | Discontinuity of Channel Material per One Leaf | – | – |
| Feed-side Channel Material | Shape | net | net |
| | Material | polyethylene | polyethylene |
| | Thickness (mm) | 0.70 | 0.70 |
| | Fiber Diameter (mm) | 0.35 | 0.35 |
| | Pitch (mm) | 5 | 5 |
| | Projected Area Ratio | 0.13 | 0.13 |
| Element Performance | Amount of Water Produced ($m^3$/day) | 23.0 | 23.4 |
| | Desalination Rate (%) | 99.61 | 99.70 |
| | Boron Removal Rate (%) | 90.6 | 90.8 |

[Table 5]

[Table 5]

| | | Example 15 | Example 16 | Example 17 | Example 18 | Example 19 |
|---|---|---|---|---|---|---|
| Element | Embodiment | first | first | first | first | first |
| | EL Size / Number of Leaves | 8 inch / 26 | 8 inch / 26 | 8 inch / 26 | 8 inch / 26 | 8 inch / 26 |
| | Effective Membrane Area (m²) | 37 | 37 | 37 | 37 | 37 |
| Separation Membrane | Leaf Length a (mm) | 800 | 800 | 800 | 800 | 800 |
| | Arrangement | linear | linear | linear | linear | linear |
| Permeate-side Channel Material | Material | polypropylene | Hot Melt PK-100S | Hot Melt PHC-9275 | Hot Melt PHC-9275 | polyethylene terephthalate |
| | Filler | calcium carbonate | - | - | magnesium silicate | - |
| | Compressive Elasticity Modulus (GPa) | 1.5 | 0.11 | 0.18 | 0.25 | 2.9 |
| | Bending Resistance (mm) | 210 | 110 | 140 | 150 | 250 |
| | Angle between Channel Material and Axial Direction of Water Collection Tube (°) | 90 | 90 | 90 | 90 | 90 |
| | Cross-section Shape | trapezoid | trapezoid | trapezoid | trapezoid | trapezoid |
| | Height c (mm) | 0.26 | 0.26 | 0.26 | 0.26 | 0.26 |
| | Upper Base (mm) | 0.45 | 0.45 | 0.45 | 0.45 | 0.45 |
| | Lower Base (mm) | 0.55 | 0.55 | 0.55 | 0.55 | 0.55 |
| | Interval b between Channel Materials in First Direction (Width Direction) (mm) | 0.40 | 0.40 | 0.40 | 0.40 | 0.40 |
| | Width d of Permeate-side Channel Material (mm) | 0.50 | 0.50 | 0.50 | 0.50 | 0.50 |
| | Interval e between Channel Materials in Second Direction (Length Direction) (mm) | 0 | 0 | 0 | 0 | 0 |
| | Length f of Channel Material (mm) | - | - | - | - | - |
| | Pitch (mm) | 0.9 | 0.9 | 0.9 | 0.9 | 0.9 |
| | Projected Area Ratio (df/(b + d)(e + f)) | 0.55 | 0.55 | 0.55 | 0.55 | 0.55 |
| | Defect Rate (%) | 0 | 0 | 0 | 0 | 0 |
| | Discontinuity of Channel Material per One Leaf | - | - | - | - | - |
| Feed-side Channel Material | Shape | net | net | net | net | net |
| | Material | polypropylene | polypropylene | polypropylene | polypropylene | polypropylene |
| | Thickness (mm) | 0.70 | 0.70 | 0.70 | 0.70 | 0.70 |
| | Fiber Diameter (mm) | 0.35 | 0.35 | 0.35 | 0.35 | 0.35 |
| | Pitch (mm) | 5 | 5 | 5 | 5 | 5 |
| | Projected Area Ratio | 0.13 | 0.13 | 0.13 | 0.13 | 0.13 |
| Element Performance | Amount of Water Produced (m³/day) | 23.5 | 21.7 | 21.8 | 22.0 | 23.8 |
| | Desalination Rate (%) | 99.61 | 99.62 | 99.61 | 99.61 | 99.60 |
| | Boron Removal Rate (%) | 90.6 | 90.8 | 90.6 | 90.6 | 90.3 |

[Table 6]

[Table 6]

| | | Example 20 | Example 21 | Example 22 | Example 25 | Example 26 |
|---|---|---|---|---|---|---|
| Element | Embodiment | first | first | first | second | third |
| | EL Size / Number of Leaves | 8 inch / 26 | 8 inch / 26 | 8 inch / 26 | 8 inch / 26 | 8 inch / 26 |
| | Effective Membrane Area (m²) | 37 | 37 | 37 | 37 | 37 |
| Separation Membrane | Leaf Length a (mm) | 800 | 800 | 800 | 800 | 800 |
| Permeate-side Channel Material | Arrangement | linear | linear | linear | linear | linear |
| | Material | polystyrene | polystyrene | polystyrene | polypropylene | polypropylene |
| | Filler | – | calcium carbonate | magnesium silicate | – | – |
| | Compressive Elasticity Modulus (GPa) | 3.5 | 4.0 | 4.2 | 1.3 | 1.3 |
| | Bending Resistance (mm) | 290 | 320 | 390 | 190 | 190 |
| | Angle between Channel Material and Axial Direction of Water Collection Tube (°) | 90 | 90 | 90 | 90 | 90 |
| | Cross-section Shape | trapezoid | trapezoid | trapezoid | trapezoid | trapezoid |
| | Height c (mm) | 0.26 | 0.26 | 0.26 | 0.26 | 0.26 |
| | Upper Base (mm) | 0.45 | 0.45 | 0.45 | 0.45 | 0.45 |
| | Lower Base (mm) | 0.55 | 0.55 | 0.55 | 0.55 | 0.55 |
| | Interval b between Channel Materials in First Direction (Width Direction) (mm) | 0.40 | 0.40 | 0.40 | 0.40 | 0.40 |
| | Width d of Permeate-side Channel Material (mm) | 0.50 | 0.50 | 0.50 | 0.50 | 0.50 |
| | Interval e between Channel Materials in Second Direction (Length Direction) (mm) | 0 | 0 | 0 | 0 | 0 |
| | Length f of Channel Material (mm) | – | – | – | – | – |
| | Pitch (mm) | 0.9 | 0.9 | 0.9 | 0.9 | 0.9 |
| | Projected Area Ratio (df/(b + d)(e + f)) | 0.55 | 0.55 | 0.55 | 0.55 | 0.55 |
| | Defect Rate (%) | 0 | 0 | 0 | 0 | 0 |
| | Discontinuity of Channel Material per One Leaf | – | – | – | – | – |
| Feed-side Channel Material | Shape | net | net | net | net | net |
| | Material | polypropylene | polypropylene | polypropylene | polypropylene | polypropylene |
| | Thickness (mm) | 0.70 | 0.70 | 0.70 | 0.70 | 0.70 |
| | Fiber Diameter (mm) | 0.35 | 0.35 | 0.35 | 0.35 | 0.35 |
| | Pitch (mm) | 5 | 5 | 5 | 5 | 5 |
| | Projected Area Ratio | 0.13 | 0.13 | 0.13 | 0.13 | 0.13 |
| Element Performance | Amount of Water Produced (m³/day) | 23.9 | 24.0 | 24.0 | 22.4 | 23.1 |
| | Desalination Rate (%) | 99.59 | 99.58 | 99.50 | 99.61 | 99.61 |
| | Boron Removal Rate (%) | 90.0 | 90.0 | 89.7 | 90.0 | 90.1 |

[Table 7]

[Table 7]

| | | Comparative Example 1 | Comparative Example 2 | Comparative Example 3 |
|---|---|---|---|---|
| Element | Embodiment | first | first | first |
| | EL Size / Number of Leaves | 8 inch / 26 | 8 inch / 26 | 8 inch / 26 |
| | Effective Membrane Area (m²) | 37 | 27 | 27 |
| Separation Membrane | Leaf Length a (mm) | 800 | 800 | 800 |
| Permeate-side Channel Material | Arrangement | – | linear | linear |
| | Material | – | Hot Melt 701A | Hot Melt 2705 |
| | Filler | – | – | – |
| | Compressive Elasticity Modulus (GPa) | – | 0.04 | 0.08 |
| | Bending Resistance (mm) | – | 75 | 90 |
| | Angle between Channel Material and Axial Direction of Water Collection Tube (°) | – | 90 | 90 |
| | Cross-section Shape | – | trapezoid | trapezoid |
| | Height c (mm) | – | 0.26 | 0.26 |
| | Upper Base (mm) | – | 0.45 | 0.45 |
| | Lower Base (mm) | – | 0.55 | 0.55 |
| | Interval b between Channel Materials in First Direction (Width Direction) (mm) | – | 0.40 | 0.40 |
| | Width d of Permeate-side Channel Material (mm) | – | 0.50 | 0.50 |
| | Interval e between Channel Materials in Second Direction (Length Direction) (mm) | – | 0.00 | 0.00 |
| | Length f of Channel Material (mm) | – | – | – |
| | Pitch (mm) | – | 1.4 | 1.0 |
| | Projected Area Ratio (df/{b + d)(e + f)) | – | 0.32 | 0.55 |
| | Defect Rate (%) | – | 0 | 0 |
| | Discontinuity of Channel Material per One Leaf | – | – | – |
| Feed-side Channel Material | Shape | net | net | net |
| | Material | polypropylene | polypropylene | polypropylene |
| | Thickness (mm) | 0.70 | 1.10 | 1.10 |
| | Fiber Diameter (mm) | 0.35 | 0.35 | 0.35 |
| | Pitch (mm) | 5 | 6 | 6 |
| | Projected Area Ratio | 0.13 | 0.21 | 0.13 |
| Element Performance | Amount of Water Produced (m³/day) | 21.1 | 9.7 | 10.1 |
| | Desalination Rate (%) | 99.67 | 99.69 | 99.61 |
| | Boron Removal Rate (%) | 90.4 | 90.3 | 90.3 |

INDUSTRIAL APPLICABILITY

The membrane element of the present invention can be particularly suitably used in desalination of brackish waster and sea water.

DESCRIPTION OF REFERENCE SIGNS

1: Separation membrane
11: Envelope-like membrane
2: Separation membrane main body
21: Feed-side surface
22: Permeate-side surface
201: Substrate
202: Porous support layer
203: Separation functional layer
31: Channel material on the permeate side
32: Channel material on the feed side
4: Separation membrane leaf
5: Flow path on the permeate side
6: Water collection tube
7: Separation membrane
71: Feed-side surface
72: Permeate-side surface
82: Porous member
91: End plate (without holes)
92: End plate (with holes)
100: Separation membrane element
a: Separation membrane (leaf) length
b: Interval between channel materials on the permeate side in width direction
c: Height difference between channel materials on the permeate side
d: Width of channel material on the permeate side
e: Interval between channel materials on the permeate side in length direction
f: Length of channel material on the permeate side
R2: Region including a portion between front-end and tail-end of the channel material on the permeate side aligned from the inner side in winding direction to the outer side in winding direction in the separation membrane
R3: Region where channel material on the permeate side is not disposed in the outer end in winding direction of the separation membrane
L1: Length of whole separation membrane (the above length a)
L2: Length of region R2
L3: Length of region R3
100: Separation membrane element
100A: Separation membrane element (first embodiment)
100B: Separation membrane element (second embodiment)
100C: Separation membrane element (third embodiment)
101: Raw water
102: Permeate water
103: Concentrate water

**Claims**

1. A separation membrane comprising: a separation membrane main body and a channel material affixed to the separation membrane main body,
   wherein the compressive elasticity modulus of the channel material is 0.1 GPa or more and 5.0 GPa or less.

2. The separation membrane according to claim 1, wherein the bending resistance of the separation membrane is 400 mm or less.

3. The separation membrane according to claim 1 or 2, wherein the rate of deformation of the height of the channel material is 40% or less when the separation membrane is operated at a raw water temperature of 25°C or less and at a pressure of 5.5 MPa or less.

4. The separation membrane according to any one of claims 1 to 3, wherein
the separation membrane main body comprises a feed-side surface and a permeate-side surface, and
the channel material is disposed on the permeate-side surface.

5. The separation membrane according to any one of claims 1 to 4,
wherein the channel material is formed of a material different from that of the separation membrane functional layer.

6. The separation membrane according to any one of claims 1 to 5, wherein the height of the channel material from the surface of the separation membrane is 30 $\mu$m or more and 800 $\mu$m or less.

7. The separation membrane according to any one of claims 1 to 6, wherein the channel material is discontinuously disposed on the separation membrane main body in a first direction.

8. The separation membrane according to any one of claims 1 to 7, wherein the channel material is continuously disposed from one end of the separation membrane main body to the other end in a direction perpendicular to the first direction.

9. The separation membrane according to any one of claims 1 to 8, wherein the interval between the channel materials adjacent to each other is 0.05 mm or more and 5 mm or less.

10. The separation membrane according to any one of claims 1 to 9, wherein the channel material is formed of a thermoplastic resin.

11. The separation membrane according to any one of claims 1 to 10, wherein the separation membrane main body comprises a substrate; a porous support layer disposed on the substrate; and a separation functional layer disposed on the porous support layer, and
the substrate is a long fiber nonwoven fabric.

12. The separation membrane according to claim 11, wherein fibers at the surface layer opposite to the porous support layer-side surface layer of the long fiber nonwoven fabric are more vertically oriented than those at the porous support layer-side surface layer.

13. A separation membrane element comprising a water collection tube, and the separation membrane according to any one of claims 1 to 12, wherein
the separation membrane is arranged such that the first direction is along an axial direction of the water collection tube and wound around the water collection tube.

14. A method for producing a separation membrane, the method comprising the steps of:

preparing a separation membrane main body having at least a substrate and a separation functional layer;
softening, by heating, a material having a compressive elasticity modulus of 0.1 GPa or more and 5.0 GPa or less;
forming a channel material on a permeate side by arranging the softened material on a substrate-side surface of the separation membrane main body; and
affixing the channel material on the permeate side onto the separation membrane main body by solidifying the material.

【Fig.1】

【Fig.2】

【Fig.3】

【Fig.4】

【Fig.5】

【Fig.6】

Inner Side ←——— MD ———→ Outer Side

【Fig.7】

【Fig.8】

【Fig.9】

【Fig.10】

## INTERNATIONAL SEARCH REPORT

International application No.

PCT/JP2012/075078

**A. CLASSIFICATION OF SUBJECT MATTER**
*B01D63/00*(2006.01)i, *B01D63/10*(2006.01)i, *B01D69/10*(2006.01)i, *B01D69/12* (2006.01)i

According to International Patent Classification (IPC) or to both national classification and IPC

**B. FIELDS SEARCHED**

Minimum documentation searched (classification system followed by classification symbols)
B01D53/22, B01D61/00-71/82, C02F1/44

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 3-249907 A  (Toray Industries, Inc.),<br>07 November 1991 (07.11.1991),<br>page 2, lower right column, lines 3 to 9;<br>page 3, upper right column, lines 8 to 19;<br>example 1; fig. 1 to 3<br>& US 5154832 A          & EP 448973 A1<br>& KR 10-0161292 B1 | 1-10,13,14<br>11,12 |
| Y | WO 2011/105278 A1  (Toray Industries, Inc.),<br>01 September 2011 (01.09.2011),<br>paragraph [0022]<br>(Family: none) | 11,12 |
| A | JP 2003-275545 A  (Nitto Denko Corp.),<br>30 September 2003 (30.09.2003),<br>claims<br>(Family: none) | 1-14 |

☒ Further documents are listed in the continuation of Box C.       ☐ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    22 November, 2012 (22.11.12) | Date of mailing of the international search report<br>    04 December, 2012 (04.12.12) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2012/075078 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2006-247629 A  (Nitto Denko Corp.), 21 September 2006 (21.09.2006), claims; fig. 1, 2 (Family: none) | 1-14 |
| A | JP 3-504820 A  (Aqua-Chem, Inc.), 24 October 1991 (24.10.1991), claims; fig. 1 to 6 & US 4814079 A           & WO 1989/009640 A1 | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006247453 A
- JP 2010099590 A
- JP 44014216 B
- JP 4011928 B
- JP 11226366 A

**Non-patent literature cited in the description**

- *Office of Saline Water, Research and Development Progress Report,* 1968